(19) Europäisches Patentamt

European Patent Office

Office européen des brevets

(11) **EP 1 476 339 B1**

(12) **FASCICULE DE BREVET EUROPEEN**

(45) Date de publication et mention
de la délivrance du brevet:
**21.06.2006 Bulletin 2006/25**

(51) Int Cl.:
***B60T 8/00*** (2006.01)

(21) Numéro de dépôt: **03706442.5**

(22) Date de dépôt: **06.02.2003**

(86) Numéro de dépôt international:
**PCT/EP2003/001176**

(87) Numéro de publication internationale:
**WO 2003/066400 (14.08.2003 Gazette 2003/33)**

(54) **ESTIMATION DU COEFFICIENT D'ADHERENCE MAXIMAL A PARTIR DE LA CONNAISSANCE DES EFFORTS ET DU COUPLE D'AUTOALIGNEMENT GENERES DANS L'AIRE DE CONTACT D'UN PNEU**

SCHÄTZUNG DES MAXIMALEN HAFTUNGSKOEFFIEZIENTEN ANHAND DER KRÄFTE UND DES MOMENTS DER SELBSTAUSRICHTUNG IN DER AUFSTANDSFLÄCHE EINES REIFENS

ESTIMATING MAXIMUM FRICTION COEFFICIENT BASED ON KNOWLEDGE OF LOADS AND SELF-ALIGNMENT TORQUE GENERATED IN A TYRE CONTACT ZONE

(84) Etats contractants désignés:
**AT BE BG CH CY CZ DE DK EE ES FI FR GB GR HU IE IT LI LU MC NL PT SE SI SK TR**

(30) Priorité: **08.02.2002 FR 0201597**

(43) Date de publication de la demande:
**17.11.2004 Bulletin 2004/47**

(73) Titulaires:
• **Société de Technologie Michelin**
  **63000 Clermont-Ferrand (FR)**
• **MICHELIN RECHERCHE ET TECHNIQUE S.A.**
  **1763 Granges-Paccot (CH)**

(72) Inventeur: **BERTRAND, David**
**F-63400 Chamalières (FR)**

(74) Mandataire: **Bauvir, Jacques**
**M.F.P. Michelin,**
**SGD/LG/PI-F35-Ladoux**
**63040 Clermont-Ferrand Cedex 09 (FR)**

(56) Documents cités:
**EP-A- 0 937 615          WO-A-01/92078**
**DE-A- 3 939 917          US-A- 5 964 265**
**US-A1- 2002 011 093**

# Description

La présente invention se rapporte à l'évaluation de l'adhérence d'un véhicule sur une chaussée. Elle concerne plus particulièrement la détermination des caractéristiques d'effort et de l'adhérence dans le contact entre la chaussée et une roue de véhicule, équipée d'un bandage élastique tel qu'un pneu gonflé ou un bandage élastique non pneumatique qui roule sur la chaussée.

Selon le document WO 0192078 on connaît un procédé d'évaluation de l'adhérence en tenant compte des caractéristiques d'effort.

La présente invention concerne aussi les divers dispositifs d'assistance électronique utilisés par exemple pour la régulation antiblocage des freins d'un véhicule ou la régulation anti-patinage des roues motrices, le contrôle de trajectoire d'un véhicule ou encore pour d'autres formes de contrôle ou de surveillance comme la pression des pneus. On sait que de tels dispositifs reconstruisent par calcul le coefficient d'adhérence (μ) des pneus sur la chaussée, sans avoir procédé à la moindre mesure ni du coefficient d'adhérence ni des efforts développés dans le contact des pneus au sol. Même si ces dispositifs apportent une assistance remarquable et un surcroît de sécurité, leur fonctionnement gagnerait beaucoup à utiliser une valeur mesurée, ou estimée à partir de mesures réelles effectuées sur le pneu en fonctionnement.

C'est pourquoi l'objectif de la présente invention est de proposer une évaluation des efforts en jeu dans le contact du véhicule sur la chaussée, et une évaluation de l'adhérence d'un véhicule sur une chaussée. Elle concerne plus particulièrement la détermination de caractéristiques d'efforts et de l'adhérence entre la chaussée et une roue de véhicule, ou un pneu ou un bandage élastique, termes considérés comme équivalents dans le contexte de la présente invention.

Les divers dispositifs d'assistance électronique évoqués ci-dessus profiteraient donc utilement d'indications « en temps réel » sur les efforts et les conditions d'adhérence susceptibles d'affecter le comportement d'un véhicule, notamment dans le cas où il subit une accélération par effort moteur ou par effort freineur ou par changement de direction de déplacement. L'invention vise à fournir une méthode d'y parvenir de manière efficace.

Dans ce qui suit, on entend par « potentiel d'adhérence maximum » le rapport entre l'effort tangentiel maximal (transversal, longitudinal ou les deux combinés) et l'effort normal que la roue peut subir sans glisser. Dans le texte, on le désigne aussi par le terme « coefficient d'adhérence maximal » ou la lettre μ.

On entend par « efforts globaux » les trois composantes de forces Fx, Fy et Fz appliquées au centre de la roue et le couple d'auto-alignement N autour de l'axe Z.

Dans le but d'estimer le potentiel d'adhérence maximum, il a été proposé d'équiper la bande de roulement d'un pneu, ou certains éléments de la bande de roulement spécialement adaptés, de capteurs destinés à mesurer ou à estimer les efforts générés localement, en particulier en conditions de glissement. Ces approches, quoique fort prometteuses, requièrent de faire fonctionner un capteur dans la bande de roulement du pneu, en particulier de le faire fonctionner de préférence pendant toute la vie du pneu. De plus, les estimations fournies par ces capteurs sont locales et donc très sensibles à l'état de surface de la chaussée.

Or comme on cherche en fait à estimer le potentiel d'adhérence maximum de la roue, il faut encore le déterminer à partir du potentiel local mesuré.

L'invention détaillée ici se distingue de ces approches locales. Elle peut être utilisée en complément de celles-ci ou à la place de celles-ci. Elle propose d'utiliser une mesure des déformations globales du pneu de manière à obtenir une information sur le potentiel d'adhérence maximum de la roue sur le sol. En effet, lorsque le pneu est soumis à une sollicitation, le point d'application des forces appliquées dans l'aire de contact dépend entre autre du coefficient d'adhérence maxi parce que, dès qu'une partie de l'aire de contact de la roue sur la chaussée est en glissement, sa contribution aux efforts tangentiels est saturée à un niveau qui dépend du coefficient d'adhérence. Les déformations du pneu sont elles mêmes sensibles au déplacement de ce point d'application. En particulier, l'extension circonférentielle des flancs, sensible aux efforts appliqués, est aussi sensible au déplacement du point d'application des forces dans l'aire de contact.

La méthode proposée utilise des mesures des déformations circonférentielles du flanc en certains azimuts du pneu pour permettre une estimation des efforts et du coefficient d'adhérence maxi.

L'invention propose une méthode de détermination du coefficient d'adhérence μ dans l'aire de contact d'un pneu sur une chaussée, comportant les étapes suivantes :

- déterminer les trois composantes d'une résultante d'efforts exercés par la chaussée sur l'aire de contact d'un pneumatique et le couple d'auto-alignement généré par le pneu,
- traiter les signaux d'évaluation des trois composantes d'une résultante d'efforts exercés par la chaussée sur l'aire de contact d'un pneumatique et du couple d'auto-alignement généré par le pneu de façon à en extraire ledit coefficient d'adhérence μ.

La description faite ci-dessous propose en outre une détermination des trois composantes d'une résultante d'efforts exercés par la chaussée sur l'aire de contact d'un pneumatique et du couple d'auto-alignement généré par le pneu comportant les étapes suivantes :

- sélectionner plusieurs points fixes dans l'espace, situés à des azimuts différents le long de la circonférence dans au moins un flanc du pneu,

- effectuer autant de mesures de variation de distance circonférentielle (extension ou contraction) à ces points fixes lorsque le pneu roule sur la chaussée
- traiter les signaux de mesure de façon à en extraire les trois composantes d'une résultante d'efforts exercés par la chaussée sur l'aire de contact d'un pneumatique et le couple d'auto-alignement généré par le pneu,
- traiter les signaux d'évaluation des trois composantes d'une résultante d'efforts exercés par la chaussée sur l'aire de contact d'un pneumatique et du couple d'auto-alignement généré par le pneu de façon à en extraire ledit coefficient d'adhérence μ.

Cependant, cette détermination n'est pas impérative et l'on pourrait appliquer l'estimation coefficient d'adhérence μ proposée ci-dessous à partir de valeurs des trois composantes d'une résultante d'efforts exercés par la chaussée sur l'aire de contact d'un pneumatique et du couple d'auto-alignement généré par le pneu obtenus autrement.

Pour fournir une bonne estimation de μ, la méthode nécessite qu'il existe une zone de glissement dans l'aire de contact, qu'elle soit créée par une conception spéciale du pneu ou par un niveau suffisant de sollicitation appliqué au pneu. De manière à obtenir une information fiable même en cas de faible glissement, il est proposé d'estimer, en plus du potentiel d'adhérence maximal, le pourcentage de potentiel utilisé. Cette grandeur présente en effet l'avantage d'être plus facilement estimée en valeur absolue même pour des sollicitations faibles.

La méthode de l'invention est basée sur la constatation du fait que les efforts agissant entre la bande de roulement du pneu et la chaussée provoquent une déformation sensible et reproductible sous forme d'une extension ou contraction circonférentielle des flancs des pneus. Cette déformation d'extension ou de contraction circonférentielle, si l'on parvient à la mesurer isolément lors de la rotation du pneu en temps réel, peut permettre de connaître à chaque instant le sens et l'intensité des efforts agissant sur le pneu ainsi que le signe et l'intensité du couple d'auto-alignement exercé par le pneu et le coefficient d'adhérence du pneu sur la chaussée.

Du fait même de sa conception et de son mode de fonctionnement, les déformations générées dans le pneu lorsqu'il est sollicité dépendent aussi de sa pression de gonflage. Ainsi, la pression de gonflage est avantageusement un des paramètres utilisés et/ou traités dans la méthode proposée ici. Cette pression peut être connue par un moyen de mesure spécifique et indépendant des mesures faites dans le contexte de cette invention, un exemple d'un tel moyen étant un capteur de pression. Cette pression peut aussi découler d'un traitement spécifique de la mesure des déformations circonférentielles.

Dans des conditions réelles d'utilisation, le pneu est fréquemment soumis à des variations de l'angle de carrossage. Il en résulte une modification des déformations du pneu. Ainsi, le carrossage est avantageusement un des paramètres de la méthode proposée ici. Le carrossage peut être connu par un moyen de mesure spécifique et indépendant des mesures faites dans le contexte de cette invention, un exemple d'un tel moyen étant un capteur d'angle de carrossage. Ce carrossage peut aussi découler d'un traitement spécifique de la mesure des déformations circonférentielles.

Sous un aspect particulier mais intéressant, l'invention propose d'estimer la contraction ou l'extension circonférentielle des flancs par la mesure de la distance entre les fils de la nappe carcasse dans les flancs. On peut aussi mesurer la distance entre des (par exemple deux) fils placés dans les flancs pour former un capteur, et qui subissent des mouvements corrélés à ceux des fils de la nappe carcasse. On parlera dans la suite de la mesure de « l'écart entre les fils ». Notons que si cette dénomination est liée à la structure radiale d'un pneu la méthode ne s'applique pas uniquement aux pneus à carcasse radiale. Ainsi, on parlera « d'écart fils » pour désigner la distance moyenne entre deux tracés réalisés sur le flanc à des azimuts voisins mais différents.

Notons que dans le cas où la mesure de l'extension circonférentielle des flancs est réalisée dans l'épaisseur des flancs à un endroit différent de leur fibre neutre en flexion, l'extension circonférentielle inclut une composante due à la flexion du flanc, notamment lors du passage dans l'aire de contact (phénomène aussi appelé « ventre de lapin »). Cette composante due à la flexion n'est en aucun cas un problème et peut être mise à profit pour augmenter la dynamique de variation des signaux utilisés par l'invention en réalisant la mesure d'extension ailleurs que sur la fibre neutre en flexion.

La suite de la description explique plus en détails l'invention à l'aide des figures jointes dans lesquelles :

la figure 1 est une perspective d'un pneu sur lequel on définit des conventions utiles à l'intelligence de l'invention ;

la figure 2 est une vue de face d'un pneu schématique permettant d'expliquer l'invention ;

la figure 3 est une vue de côté d'un pneu schématique permettant d'expliquer l'invention ;

la figure 4 illustre le cisaillement d'une nervure dans l'aire de contact, ainsi que les contraintes associées ;

la figure 5 illustre l'effet du coefficient de frottement sur la répartition des efforts ;

la figure 6 illustre la relation entre N et Fy sur un pneu réel en fonction du coefficient de frottement ;

la figure 7 représente la relation entre N et Fy à Fx nul et Fz constant lorsque l'angle de carrossage varie ;

la figure 8 représente la relation entre N et Fy à Fx nul et Fz constant lorsque la pression de carrossage varie ;

la figure 9 donne le domaine d'utilisation de la méthode ;
les figures 10a et 10b montrent l'effet de la composante verticale Fz :

- où la courbe pleine correspond à une charge verticale de 400 daN,
- où la courbe en pointillés correspond à une charge verticale de 500 daN,
- où la courbe en trait mixte correspond à une charge verticale de 300 daN ;

les figures 11a et 11b montrent l'effet de la composante Fx :

- où la courbe pleine correspond à une charge verticale de 400 daN et une absence de force Fx,

- où la courbe en pointillés correspond à une charge verticale de 400 daN et une force Fx de 400 daN (force motrice),

- où la courbe en trait mixte correspond à une charge verticale de 400 daN et une force Fx de - 400 daN (force freineuse) ;

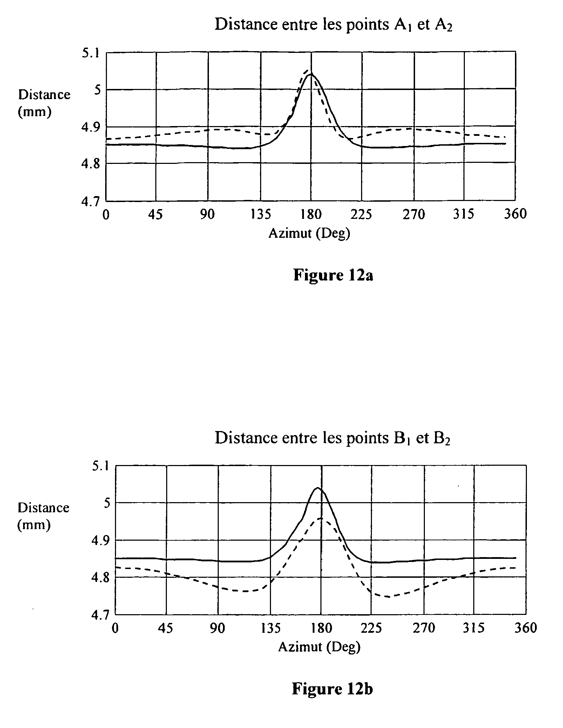

les figures 12a et 12b montrent l'effet de la composante Fy :

- où la courbe pleine correspond à une charge verticale de 400 daN sans effort Fy,

- où la courbe en pointillés correspond à une charge verticale de 400 daN avec un effort Fy de 280 daN ;

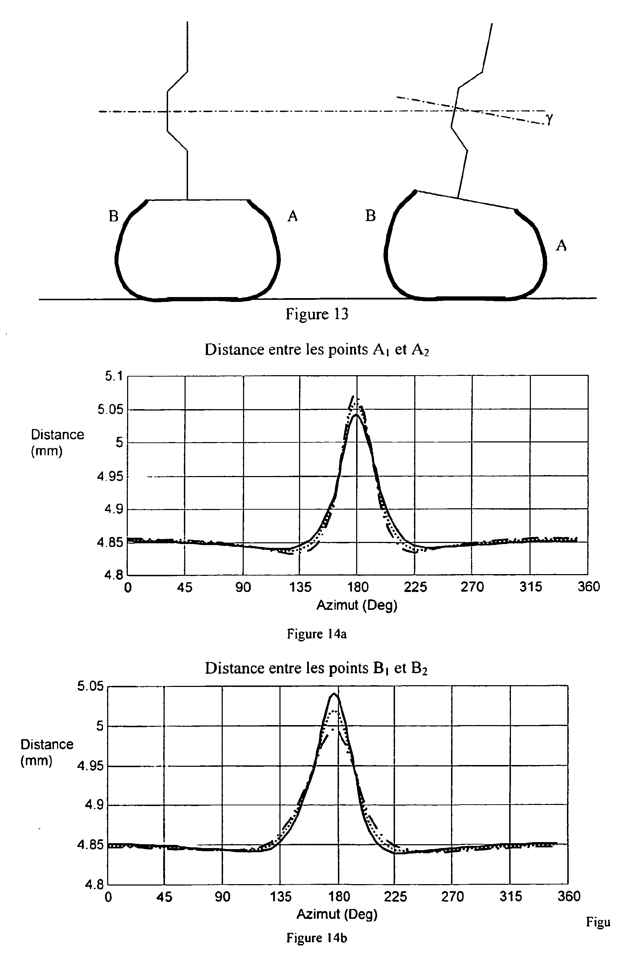

la figure 13 montre la déformation du pneumatique lorsqu'un angle de carrossage est appliqué,
les figures 14a et 14b montrent l'effet du carrossage sur les signaux de déformation circonférentielle :

- où la courbe pleine correspond à une charge verticale de 400 daN sans effort Fx et Fy et à un angle de carrossage nul,
- où la courbe en pointillés correspond à une charge verticale de 400 daN avec un angle de carrossage de 2°,
- où la courbe en traits mixtes correspond à une charge verticale de 400 daN avec un angle de carrossage de 4° ;

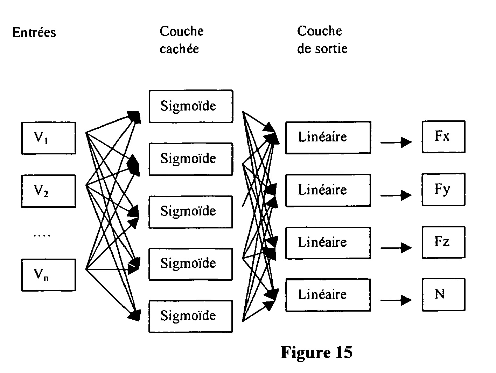

la figure 15 montre l'architecture de réseau de neurones ;

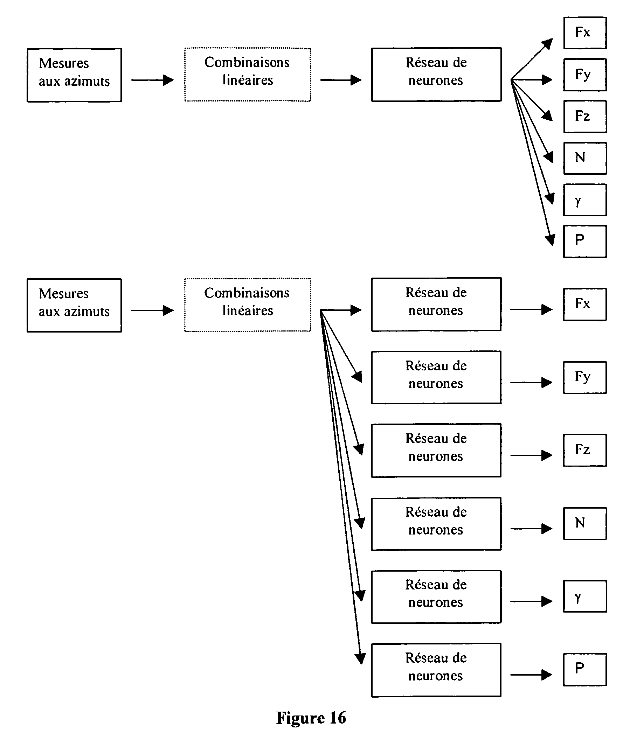

la figure 16 montre des exemples de fonction de transfert où les combinaisons linéaires en entrée sont facultatives. Il est possible d'utiliser un réseau à plusieurs sorties ou plusieurs réseaux à une sortie ou toute autre combinaison ;

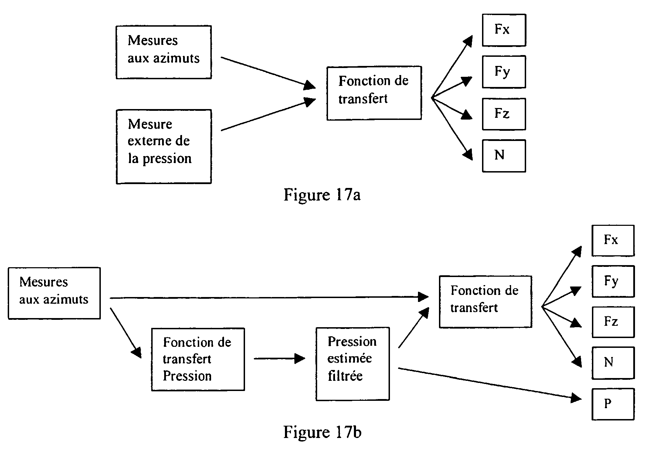

les figures 17a et 17b montrent deux exemples d'architecture permettant de prendre en compte la pression de gonflage du pneumatique si celle-ci varie ;

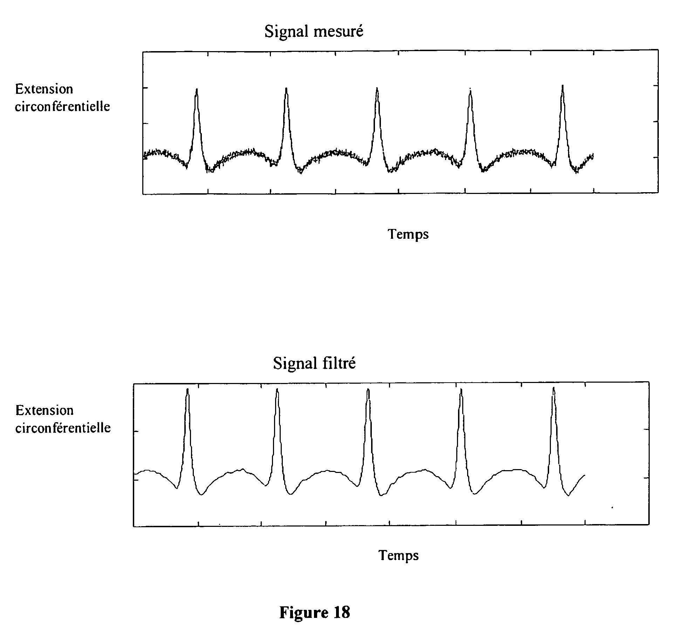

la figure 18 montre le signal temporel brut et filtré ;

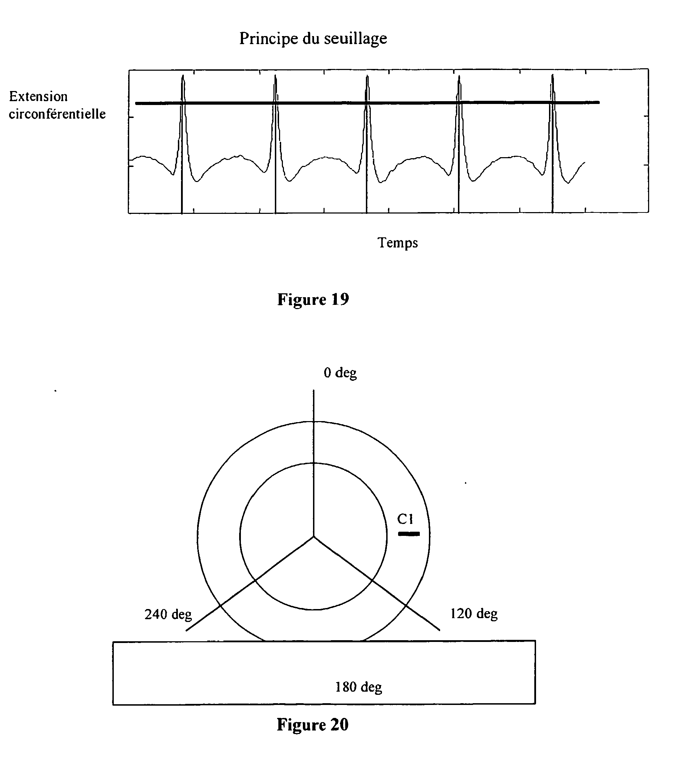

la figure 19 montre l'identification du passage dans l'aire de contact à partir du signal temporel ;
la figure 20 montre un exemple de fonctionnement avec un capteur et un modèle ;

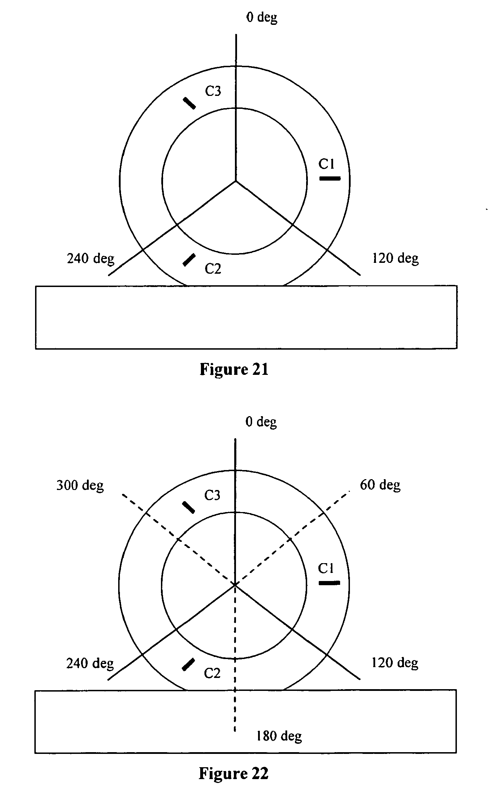

la figure 21 montre un exemple de fonctionnement avec trois capteurs et un modèle ;
la figure 22 montre un exemple de fonctionnement avec trois capteurs et deux modèles :

- où les positions indiquées en traits pleins représentent les azimuts auxquels les mesures doivent être prises pour servir d'entrée au modèle 1,

- où les positions indiquées en traits pointillés représentent les azimuts auxquels les mesures doivent être prises pour servir d'entrée au modèle 2,

- où C1, C2 et C3 représentent les positions des capteurs sur le flanc d'un pneumatique.

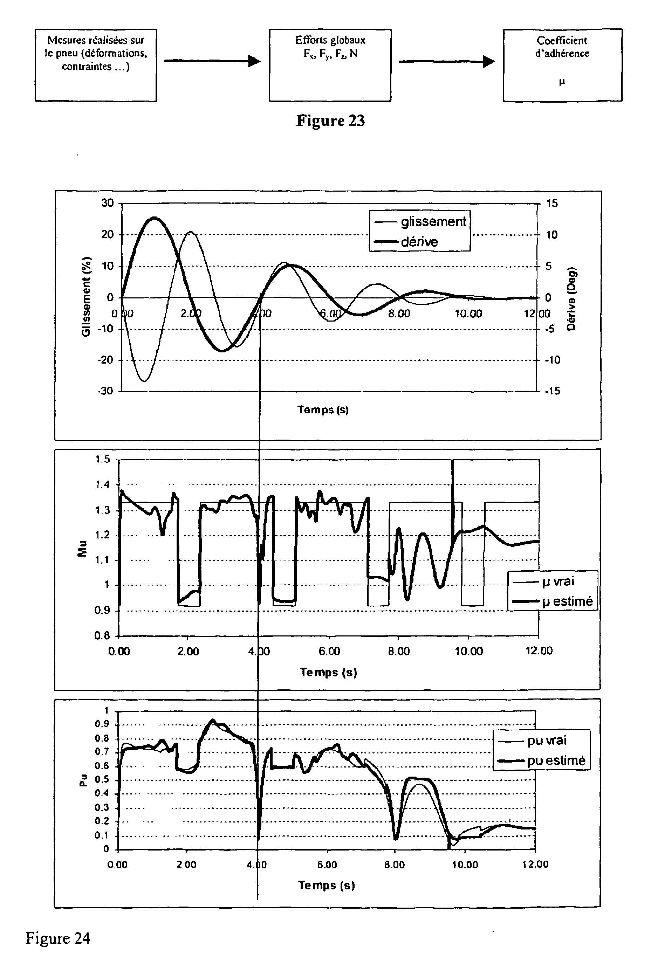

la figure 23 est un bloc diagramme de l'estimation des efforts, puis de $\mu$ à partir des mesures de déformation ;
la figure 24 donne les résultats de l'estimation de $\mu$ et du pourcentage du potentiel d'adhérence utilisé « pu ».

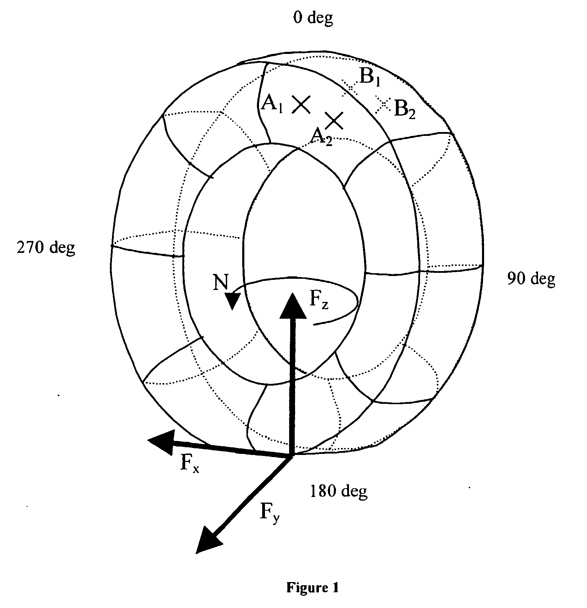

La méthode décrite ici s'appuie sur le fait que chaque force appliquée au pneu dans l'aire de contact provoque une modification de l'extension circonférentielle des flancs du pneu. Considérons le cas d'un pneu monté sur sa roue et gonflé sur le premier flanc duquel on repère (figure 1) deux points $A_1$ et $A_2$ placés sur un même rayon mais séparés dans la direction circonférentielle. Sur le second flanc, aux mêmes azimuts que $A_1$ et $A_2$ et sur le même rayon, on choisit deux points $B_1$ et $B_2$. En l'absence de forces appliquées sur le pneu, la distance qui sépare les deux points est constante en fonction de l'angle de rotation de l'ensemble monté. Définissons l'azimut $\theta$ comme l'angle auquel on analyse l'extension circonférentielle des flancs. L'origine de l'azimut est prise à l'opposé du centre de l'aire de contact. Le centre de l'aire de contact a donc l'azimut 180°.
Lorsque le pneu est soumis à des forces, on observe les effets suivants pour chacune des composantes desdites forces :

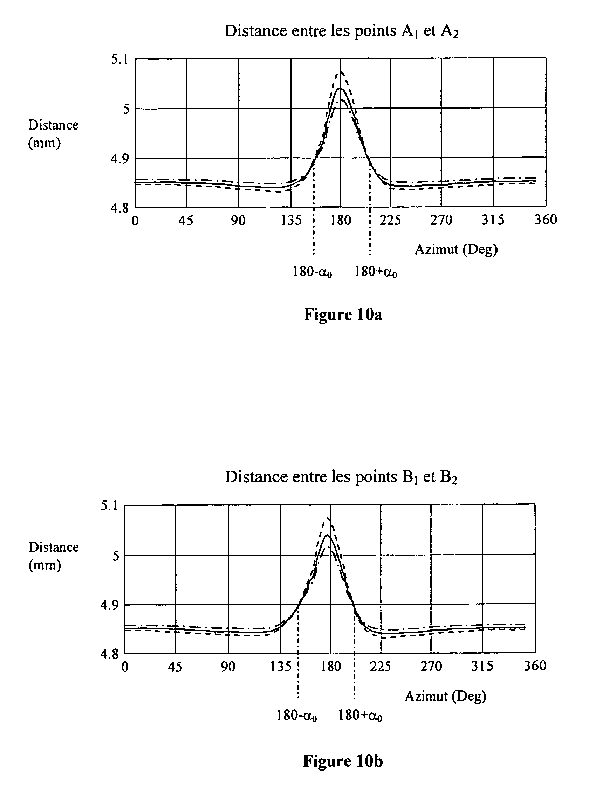

• La composante verticale (dénommée Fz) plaque le pneu sur le sol. En créant une aire de contact, elle entraîne une variation de la distance entre les deux points $A_1$ et $A_2$ lorsque le pneu est en rotation, traduisant une modification de l'extension circonférentielle des flancs. Les figures 10a et 10b indiquent la distance qui sépare, respectivement les points A et les points B, en fonction de l'azimut auquel ils se trouvent. L'augmentation de la composante verticale appliquée entraîne une extension des deux flancs dans l'aire de contact (augmentation de la distance vers 180°) et une contraction des autres zones du flanc, principalement en entrée et en sortie de l'aire de contact (diminution de la distance partout ailleurs, principalement vers 135° et 225°). Il est aussi intéressant de constater qu'il existe un azimut en entrée de l'aire de contact et un azimut en sortie d'aire de contact où la valeur d'extension circonférentielle est sensiblement indépendante de la composante Fz appliquée. Soit $\alpha_0$ tel que ces azimuts particuliers soient égaux à $(180-\alpha_0)°$ et $(180+\alpha_0)°$.

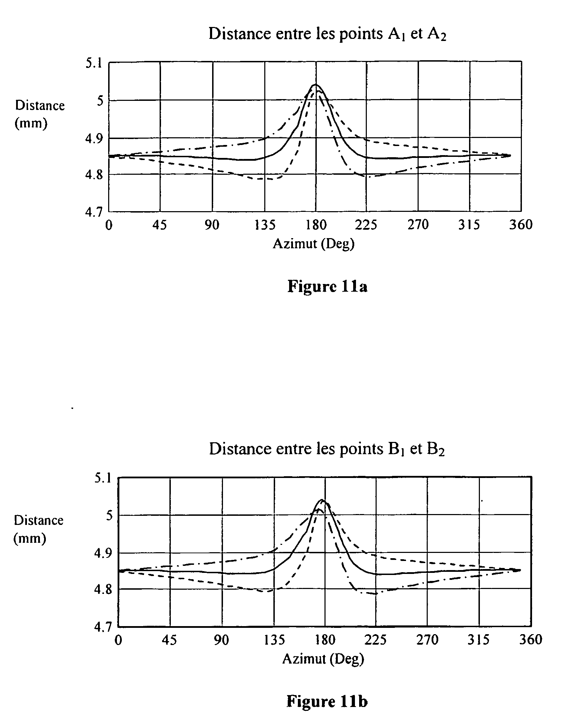

- La composante horizontale dans la direction de roulage (dénommée Fx) provoque une différentiation des zones situées en entrée et en sortie de l'aire de contact. Ceci se traduit par une évolution de l'extension des flancs essentiellement en entrée et en sortie de l'aire de contact. Les figures 11a et 11b illustrent les effets de la composante Fx des forces appliquées, en indiquant la distance qui sépare, respectivement les points A et les points B, en fonction de l'azimut auquel ils se trouvent. Lorsqu'une force Fx positive est appliquée (couple moteur), les deux flancs sont comprimés dans la direction circonférentielle en entrée d'aire de contact et en extension en sortie d'aire de contact (Diminution de la distance environ vers 135° et augmentation environ vers 225°). Lorsqu'une force Fx négative est appliquée (couple freineur), les deux flancs sont comprimés dans la direction circonférentielle en sortie d'aire de contact et en extension en entrée (Diminution de la distance vers 225° et augmentation vers 135°).

- La composante horizontale dans la direction transverse (dénommée Fy) provoque principalement une différenciation des deux flancs. Les figures 12a et 12b illustrent les effets de ce type de sollicitation, en indiquant la distance qui sépare, respectivement les points A et les points B, en fonction de l'azimut auquel ils se trouvent. Dans le cas d'une sollicitation avec Fy positif, l'un des flancs est principalement mis en extension circonférentielle (augmentation de la distance entre $A_1$ et $A_2$) et l'autre flanc est mis en contraction circonférentielle (diminution de la distance entre $B_1$ et $B_2$).

Le couple d'auto-alignement N (moment autour de l'axe vertical) n'est pas à proprement parler un autre effort agissant entre la bande de roulement du pneu et la chaussée. Il s'agit plutôt d'une conséquence de la façon dont les composantes Fx, Fy et Fz sont appliquées dans l'aire de contact. Si le point d'application de la résultante ayant pour composantes Fx, Fy et Fz n'est pas le centre de l'aire de contact, cette résultante génère un moment autour de Oz que l'on appelle couple d'auto-alignement. La présence de ce moment se traduit principalement par une rotation de l'aire de contact autour de Oz. Cet effet a pour conséquence par exemple une extension circonférentielle en entrée d'aire de contact et une contraction circonférentielle en sortie d'aire de contact sur un flanc alors que sur l'autre flanc on observe une contraction circonférentielle en entrée d'aire de contact et une extension circonférentielle en sortie d'aire de contact par rapport à une situation à couple d'auto-alignement nul.

Dans le cas où un angle de carrossage significatif est appliqué au pneumatique, les comportements des deux flancs se distinguent. De manière simplifiée, tout se passe comme si un flanc porte plus de charge que l'autre. La figure 13 illustre ce fonctionnement en comparant une section de la partie du pneu dans l'aire de contact sans carrossage et avec un carrossage $\gamma$. Il en résulte aussi un léger déplacement latéral de l'aire de contact qui se traduit par une poussée dans la direction Y. Les figures 14a et 14b montrent l'évolution de la déformation circonférentielle dans les deux flancs. Sur le flanc surchargé (Points A), l'évolution est semblable à celle d'une augmentation de la charge. Sur l'autre flanc (Points B), on constate une évolution compatible avec une diminution de la charge portée.

Avant de poursuivre, notons que le signal d'extension en fonction de l'azimut $s(\theta)$ peut se décomposer en deux signaux $s_p(\theta)$ et $s_i(\theta)$ tels que :

$$s(\theta) = s_p(\theta) + s_i(\theta)$$

$$s_i(\theta) = -s_i(-\theta)$$

$$s_p(\theta) = s_p(-\theta),$$

où Si est appelé partie impaire et $s_p$ partie paire du signal s.

De même, soient $s^1(\theta)$ et $s^2(\theta)$ les signaux associés à la mesure de l'extension circonférentielle sur chacun des flancs du pneu et $S_p^1$, $S_i^1$, $S_p^2$, $S_i^2$ leurs décompositions en partie paire et impaire en azimut. On définit :

$$s_p^p(\theta) = \frac{s_p^1(\theta) + s_p^2(\theta)}{2}$$

$$s_p^i(\theta) = \frac{s_p^1(\theta) - s_p^2(\theta)}{2}$$

$$s_i^p(\theta) = \frac{s_i^1(\theta) + s_i^2(\theta)}{2}$$

$$s_i^i(\theta) = \frac{s_i^1(\theta) - s_i^2(\theta)}{2}$$

$s_P^P$ est appelée partie paire en flanc et paire en azimut.
$s_p^i$ est appelée partie impaire en flanc et paire en azimut.
$s_i^p$ est appelée partie paire en flanc et impaire en azimut.
$s_i^i$ est appelée partie impaire en flanc et impaire en azimut.

Les efforts Fx, Fy, Fz et le couple d'auto-alignement N sont de par leurs orientations liés à certaines symétries. En particulier, on peut utiliser ce principe pour découpler les effets des composantes efforts sur le pneu.

Fort de ces observations, la méthode explicitée ici propose de réaliser des mesures de l'extension circonférentielle sur au moins un flanc du pneumatique. Ces mesures permettent, grâce à des opérations mathématiques (combinaisons linéaires ou non entre les mesures réalisées aux différents azimuts), d'estimer les valeurs des signaux $s_i^p \, s_p^i \, s_p^P$ et $s_i^i$ en certains azimuts et par là même de fournir une évaluation du coefficient d'adhérence.

Revenons aux figures 14a et 14b. Vu que l'évolution est impaire en flancs et paire en azimuts, il est possible de distinguer simplement un effet du carrossage d'un effet Fx, Fz et N. Les figures 12 et 14 montrent que les conséquences de Fy et du carrossage ne sont pas identiques, on peut donc établir un lien sans ambiguïté entre les signaux de déformation circonférentielle et le carrossage. Il est alors possible d'estimer à l'aide des mesures de déformation circonférentielle l'angle de carrossage sous lequel le pneu travaille.

La rigidité apparente d'un pneumatique provient à la fois de son fonctionnement pneumatique (de sa pression de gonflage) et de sa rigidité structurelle (rigidité de son architecture). Les signaux de déformation circonférentielle mesurés contiennent eux aussi une composante pneumatique et une composante structurelle. Par exemple, les signaux de déformation d'un pneu gonflé à 2 bars et chargé à 400 daN suivant Z ne sont pas identiques à ceux délivrés par le même pneu à 2.5 bars et chargé à 500 daN. Cette différence correspond à la contribution structurelle et peut permettre d'estimer la pression de gonflage du pneumatique.

Dans le cas où la pression de gonflage varie, les liens qui relient les efforts appliqués et les signaux de déformation sont quantitativement modifiés, mais sans que leur nature ne soit changée. Les taux d'extension dans les flancs sont influencés par la pression et par la charge ; ils sont composés d'une contribution due au fonctionnement « pneumatique » (c'est à dire dépendant de la pression de gonflage) et une autre contribution due au fonctionnement structurel (c'est à dire des matériaux constitutifs du pneu et de leur arrangement), lequel ne change pas quand on change la pression, d'où on peut remonter à la pression.

Ainsi, la méthode peut être expliquée d'abord dans le cas d'une pression de gonflage supposée constante dans un but de simplicité. De même, nous considérons dans la suite que le carrossage est constant et nul pour rendre l'explication plus claire et ne mentionnons que les cas les plus intéressants vis à vis de ce paramètre.

Lorsque qu'une sollicitation qui mêle des composantes Fx, Fy et Fz est appliquée, on observe une superposition des effets énoncés précédemment sur l'extension dans la direction circonférentielle. Un des avantages de la méthode proposée est de permettre une séparation des contributions de chaque composante de la sollicitation appliquée, de manière à permettre une estimation de chacune de ces composantes.

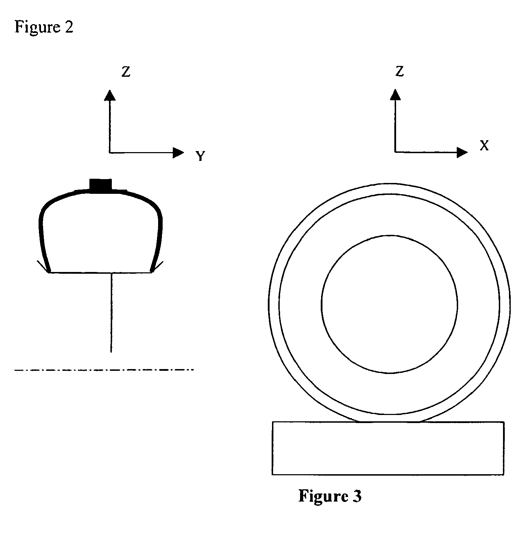

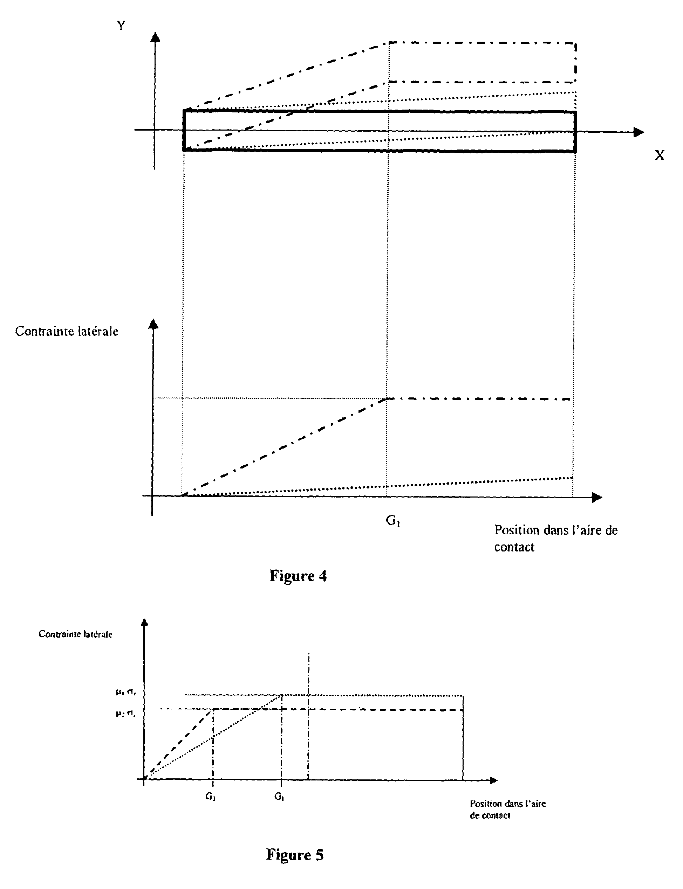

L'estimation de l'adhérence proposée par l'invention repose sur la remarque suivante : considérons un pneu simplifié muni d'une nervure unique continue. Les figures 2 et 3 représentent un tel pneu. Dans la zone de l'aire de contact, la nervure est soumise à une contrainte verticale qui la plaque contre le sol. On parle souvent de mise à plat, dans l'empreinte du pneu sur le sol. En l'absence de dérive du pneu, une droite formée par des points de repère pris sur la nervure de façon à ce qu'ils soient alignés dans l'empreinte de contact avec le sol sont ensuite, lors de la rotation du pneu, compris dans un plan qui contient ladite droite définie lorsque les points étaient dans l'empreinte de contact. Si l'on applique un angle de dérive au pneu en roulage, le plan contenant lesdits points de repère lorsqu'ils sont suffisamment éloignés de l'empreinte de contact au sol forme un angle égal à l'angle de dérive avec les points de repère lorsqu'ils sont alignés dans l'empreinte de contact avec le sol. Sur la figure 4, on peut observer en trait plein la nervure vu de dessus sans dérive et en pointillés la nervure avec une dérive imposée. Plus on s'enfonce dans l'aire de contact, plus la nervure est cisaillée et plus la contrainte latérale qui s'applique est grande. Si l'angle de dérive est suffisant, il existe dans l'aire de contact un point $G_1$ où cette contrainte latérale devient supérieure au potentiel d'adhérence maximum $\mu_1$, la nervure se met à glisser. Cette situation est représentée en trait mixte sur la figure 4.

La force latérale $Fy_1$ générée par le pneu est égale à l'intégrale dans l'aire de contact de la contrainte latérale.

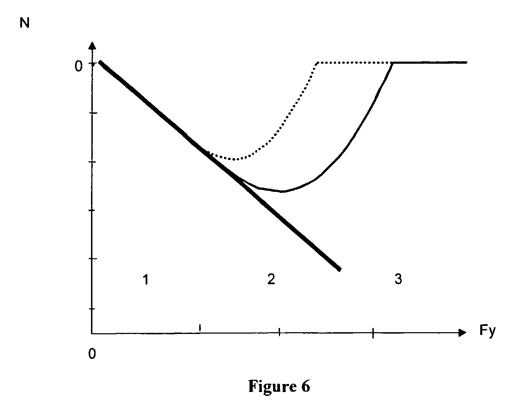

Si le pneu est placé à un endroit où le potentiel d'adhérence maxi $\mu_2$ est plus faible que $\mu_1$, il est nécessaire d'augmenter l'angle de dérive pour que le pneu génère la même force de poussée Fy. La zone de glissement commence désormais au point $G_2$ plus proche de l'entrée de l'aire de contact. La figure 5 permet de comparer les deux situations.

Entre ces deux configurations, les efforts latéraux sont les mêmes (même aire sous la courbe) mais le point d'application de la force Fy s'est déplacé. Plus le potentiel d'adhérence maxi diminue, c'est à dire plus le coefficient d'adhérence diminue, plus le point d'application de la force latérale se déplace vers l'entrée de l'aire de contact.

Une conséquence est que pour le même effort latéral Fy, les couples d'auto-alignement diffèrent en raison d'un déplacement du point d'application de la force. En théorie, on peut utiliser la mesure des efforts globaux (ici Fy et N) pour estimer le coefficient d'adhérence maxi. En effet, pour un effort Fy donné, il existe une relation monotone entre le couple d'auto-alignement N et le potentiel maxi d'adhérence $\mu$. Ainsi, dans cet exemple, la mesure simultanée de Fy et N permet de mesurer le potentiel d'adhérence maxi $\mu$ si une zone de glissement existe dans l'aire de contact.

Puisque la mesure de l'extension circonférentielle nous permet d'estimer les efforts globaux (Fx, Fy, Fz, N), elle nous permet par un traitement supplémentaire et en utilisant le principe développé précédemment d'estimer le niveau d'adhérence maximum.

Sur un pneu réel, le fonctionnement est plus complexe et d'autres phénomènes se superposent à ceux retenus dans cet exemple, mais le même principe s'applique pour mesurer le potentiel d'adhérence maxi.

On considère cette fois non seulement Fy mais aussi Fx et Fz, qui peuvent varier et influer au même titre que $\mu$ sur la géométrie de la zone en glissement et donc sur N. 11 existe donc une fonction f telle que :

$$ N = f\left(F_x, F_y, F_z, \mu, \ldots\right) $$

La figure 6 représente la fonction f en fonction de Fy pour plusieurs niveaux de $\mu$, Fx constant (0 daN) et Fz constant (400 daN). On peut observer les trois zones de fonctionnement (Absence de glissement : zone 1, glissement partiel : zone 2, glissement total : zone 3).

En fonctionnement courant, d'autres paramètres du pneu évoluent constamment et modifient la relation qui existe entre les efforts. En particulier, l'angle de carrossage appliqué au pneu et la pression de gonflage sont susceptibles de varier. Il est alors nécessaire de considérer N = f(Fx, Fy, Fz, $\mu$, P, $\gamma$)

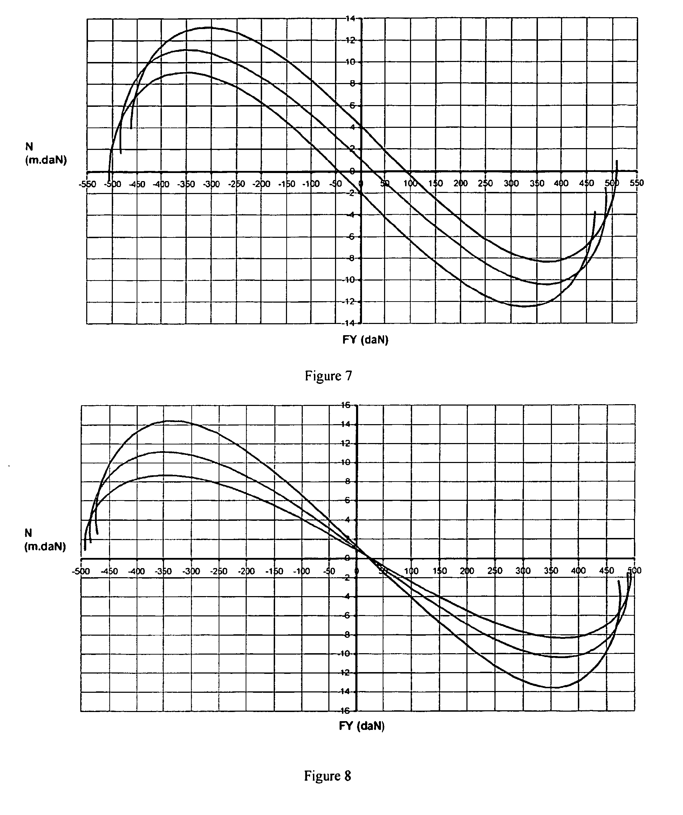

Pour un pneumatique donné, roulant dans des conditions d'adhérence fixées, la variation de l'angle de carrossage a pour effet de modifier la relation N = f(Fx, Fy, Fz, $\mu$) en se traduisant essentiellement par une translation de la surface dans l'espace (Fx, Fy, Fz). La figure 7 représente la relation entre N et Fy à Fx nul et Fz constant pour différentes valeurs d'angle de carrossage. Si nous connaissons l'angle de carrossage (par une mesure ou une estimation), il nous est possible de prendre en compte cette perturbation en appliquant une translation pour se ramener au cas du carrossage nul avant d'appliquer la fonction g qui donne n'estimation de $\mu$.

La pression de gonflage du pneumatique a bien entendu aussi une influence directe sur la relation N = f (Fx, Fy, Fz, $\mu$). La figure 8 présente pour la condition Fx=0, Fz=cste l'effet de la variation de pression sur N = f(Fx, Fy, Fz, $\mu$). L'effet principal observé se traduit par une rotation de centre O (Fy=0, N=0). Toutefois, une correction simple a priori comme celle proposée pour le carrossage (dans ce cas, ce serait une rotation) n'apparaît pas assez précise. Une parade consiste à rechercher une fonction inverse *μ = g(Fx, Fy, Fz, N, P)* prenant en compte explicitement la pression comme paramètre.

L'usure du pneumatique est elle aussi un facteur influent sur la relation qui existe entre les efforts et le niveau d'adhérence. La perturbation engendrée est difficile à modéliser mais reste assez petite. Une approche consiste alors à utiliser une fonction inverse g moyenne établie à partir des caractéristiques d'un pneu neuf et d'un pneu usé.

Dans les cas correspondant aux zones 2 et 3 de la figure 6, il existe une fonction g telle que :

$$ \mu = g\left(F_x, F_y, F_z, N, P, \gamma, \ldots\right) $$

On peut par exemple la déterminer en utilisant une approche par réseau de neurones. Toutefois, toute autre méthode mathématique permettant d'inverser une fonction ou d'approcher son inverse est utilisable.

L'application d'une approche par réseaux de neurones à l'évaluation ci-dessus montre qu'il existe un domaine I d'efforts Fx, Fy, Fz dans lequel une telle fonction g existe. Ce domaine se caractérise physiquement de la façon suivante :

- Il existe une zone de glissement dans l'aire de contact, ce qui permet à $\mu$ d'avoir un effet sur N.
- Pour tout point de ce domaine, N varie de façon monotone avec $\mu$ à efforts Fx, Fy et Fz fixés.

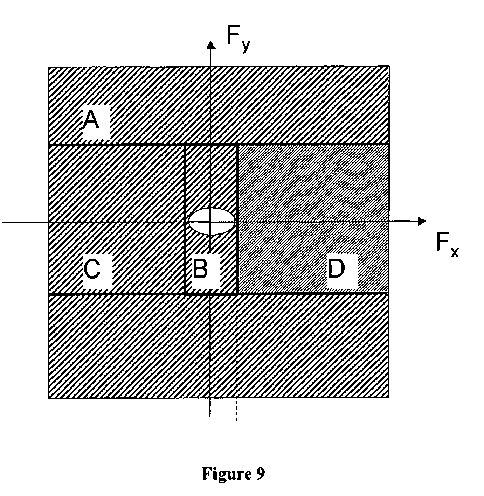

La figure 9 représente une estimation du domaine I dans lequel il est possible d'obtenir une estimation directe du potentiel d'adhérence maxi. Ce domaine est constitué de la réunion des zones marquée A, B et C en excluant la zone où il n'y a pas de glissement partiel (zone elliptique autour de $F_x=0$ et $F_y=0$).

- La partie appelée A correspond à des situations où l'effort latéral est très important. Cette zone correspond par exemple à des virages très serrés.
- La partie appelée B est la plus fréquentée en utilisation normale du véhicule. Ce sont des situations de freinage et d'accélération légers combinés ou non avec un virage.
- Enfin, la zone C correspond à un freinage très appuyé.

Dans ce domaine I, il est possible de définir un réseau de neurones, de type perceptron, approchant la fonction inverse g. Concrètement, la détermination des poids du réseau de neurones peut se faire de la façon suivante :

- Constitution d'une base de données contenant Fx, Fy, Fz et N pour un ensemble de sollicitations du pneu sur des sols présentant des coefficients d'adhérence différents. Des combinaisons des paramètres (Fx, Fy, Fz et μ) sont imposées au pneu. Elles sont enregistrées en même temps que la valeur du couple d'auto-alignement N mesurée. Cette opération peut être réalisée soit sur une machine munie de différents sols et d'une mesure des efforts et de N, soit sur un véhicule équipé d'une roue dynamométrique qui mesure Fx, Fy, Fz et N en roulant sur différents sols. Dans le cas où il est nécessaire que le système fonctionne avec des conditions de carrossage et de pression variables, la base de données doit aussi contenir suffisamment de cas de sollicitation représentatifs du domaine à couvrir.
- Détermination par apprentissage des poids d'un réseau de neurones permettant de reconstruire μ à partir de la connaissance de Fx, Fy, Fz et N et éventuellement de la pression de gonflage P et du carrossage γ. Dans le cas où la correction par translation des courbes est suffisante pour prendre en compte l'effet du carrossage, la démarche consistera à déterminer la translation à appliquer en fonction de l'angle de carrossage de manière à ramener toutes les conditions au cas du carrossage nul. Ensuite, il sera possible de déterminer par apprentissage les poids d'un réseau de neurones.
- Test et utilisation de la fonction de transfert ainsi déterminée sur l'ensemble du domaine couvert par l'apprentissage.

Notons ici qu'une façon intéressante de réduire le nombre de paramètres d'entrée au prix d'une baisse de précision consiste à utiliser non pas les efforts Fx, Fy et Fz et N mais les valeurs réduites $\dfrac{Fx}{Fz}$, $\dfrac{Fy}{Fz}$, $\dfrac{N}{Fz}$ .

En procédant d'une manière semblable à celle détaillée précédemment, on obtient alors une fonction h telle que

$$\mu = h \left( \frac{Fx}{Fz} , \frac{Fy}{Fz} , \frac{N}{Fz} , \dots \right)$$

En pratique, la détermination des coefficients du modèle se fait de manière préférée suivant une démarche précise afin d'obtenir un modèle de bonne qualité à partir d'un nombre de mesures le plus réduit possible. Cette démarche peut se décomposer en plusieurs étapes successives :

♦ Ajout de données pour bien couvrir l'espace. Suivant le moyen de test utilisé pour solliciter le pneu, il peut être difficile de bien balayer l'espace des valeurs de Fx, Fy et Fz. Dans cette première étape, on utilise un modèle de N ajusté sur les données expérimentales et dont la forme mathématique permet de représenter les variations physiques de N en fonction des efforts pour ajouter des points supplémentaires dans les zones où les mesures sont peu nombreuses.

♦ Sélection des données pertinentes. Dans l'espace Fx, Fy, Fz, les points de mesure obtenus ne sont pas toujours bien répartis. Certaines régions de l'espace contiennent beaucoup de mesures alors que dans d'autres, les points de mesure sont moins nombreux. L'utilisation directe de ces données conduirait à donner plus de poids aux régions bien peuplées par rapport aux autres régions lors de la recherche des coefficients du modèle inverse. Une manière de procéder consiste à découper l'espace en cellules de taille constante et à ne garder qu'un nombre maximum de points par cellule. Plutôt que de conserver des points de mesure au hasard, il est d'ailleurs possible d'éliminer les mesures les plus dispersées.

♦ Recherche d'un modèle direct N = f(Fx, Fy, Fz, μ,..) et ajout de données pour des niveaux d'adhérence intermédiaires. En effet, expérimentalement il est difficile de disposer de conditions d'adhérence différentes et bien maîtrisées. Pour rechercher le modèle donnant μ, on est bien souvent contraint à utiliser uniquement deux ou trois niveaux distincts d'adhérence, ce qui est parfois insuffisant. On peut contourner cette difficulté en recherchant un modèle direct paramétré par μ à l'aide des niveaux d'adhérence disponibles et en l'utilisant pour ajouter des points à des adhérences intermédiaires. Il est aussi possible de construire un modèle direct par valeur de μ mesurée et d'interpoler entre ces niveaux.

♦ Recherche du modèle inverse μ = g(Fx, Fy, Fz, N,...) à partir de la concaténation des données mesurées et ajoutées. Dans cette phase, on ajuste le modèle final qui peut être sous la forme d'un réseau de neurones à l'aide des données expérimentales triées et de données ajoutées qui permettent de contraindre la forme du modèle dans certaines régions.

Obtenir une estimation du coefficient d'adhérence maxi à partir des fonctions précédemment définies suppose impérativement de connaître Fx, Fy, Fz et N ainsi que la pression et le carrossage dans l'hypothèse où on les prend en compte. On peut par exemple et de manière préférée les déterminer de la façon suivante à partir de mesures d'extension circonférentielle, en s'appuyant en partie sur des caractéristiques de parité remarquables qui correspondent aux symétries naturelles du pneu pour réaliser cette séparation.

On a défini l'azimut θ comme l'angle auquel on analyse l'extension circonférentielle des flancs. L'origine de l'azimut a été fixée à l'opposé du centre de l'aire de contact. Le centre de l'aire de contact a donc l'azimut 180°. On a vu que signal d'extension en fonction de l'azimut $s(\theta)$ peut se décomposer en deux signaux $s_P(\theta)$ et $s_i(\theta)$ tels que :

$$s(\theta) = s_p(\theta) + s_i(\theta)$$

$$s_i(\theta) = -s_i(-\theta)$$

$$s_p(\theta) = s_p(-\theta)$$

$s_i$ est appelé partie impaire et $s_p$ partie paire de s en azimut.

De même, on a défini :

$$s_p^p(\theta) = \frac{s_p^1(\theta) + s_p^2(\theta)}{2}$$

$$s_p^i(\theta) = \frac{s_p^1(\theta) - s_p^2(\theta)}{2}$$

$$s_i^p(\theta) = \frac{s_i^1(\theta) + s_i^2(\theta)}{2}$$

$$s_i^i(\theta) = \frac{s_i^1(\theta) - s_i^2(\theta)}{2}$$

$s_p^p$ est appelée partie paire en flanc et paire en azimut.
$s_p^i$ est appelée partie impaire en flanc et paire en azimut.
$s_i^p$ est appelée partie paire en flanc et impaire en azimut.
$s_i^i$ est appelée partie impaire en flanc et impaire en azimut.

Ainsi, d'après les observations (figures 8a, 8b, 9a, 9b, 10a et 10b) le signal :

- $s_i^P$ est majoritairement lié à la force Fx.
- $s_p^i$ est majoritairement lié à la force Fy
- $s_p^p$ est majoritairement lié à la force Fz

Les symétries qui s'appliquent permettent de plus d'affirmer que le signal $s_i^i$ est principalement lié au couple d'auto-alignement N.

Fort de ces observations, la méthode explicitée ici propose de réaliser des mesures de l'extension circonférentielle sur au moins un flanc du pneumatique. Ces mesures permettent grâce à des opérations mathématiques (combinaisons linéaires ou non entre les mesures réalisées aux différents azimuts) d'estimer les valeurs des signaux $Si^p$ $S_p^i$ $Sp^P$ et $s_i^i$ en certains azimuts et par là même de fournir une évaluation des composantes de la force appliquée.

Dans le but d'éclairer la démarche, on présente ici quelques exemples d'utilisation de la méthode qui ne sont pas exhaustifs. Considérons le cas où les mesures sont réalisées sur un flanc uniquement.

Détermination 1 :

On souhaite estimer les composantes des efforts appliqués dans l'aire de contact et le couple d'auto-alignement à partir de mesures de l'extension circonférentielle d'un flanc du pneumatique mesurée en trois azimuts. Les azimuts de mesure sont choisis de la manière suivante :

- Un des azimuts correspond au milieu de l'aire de contact (azimut 180°). Soit $V_c$ la valeur mesurée à ce point. L'azimut qui correspond à l'opposé de l'aire de contact est utilisable de manière équivalente.

- Les deux autres azimuts sont symétriques par rapport à l'azimut du centre de l'aire de contact. (180°+α° et 180°-α°). Soient $V_1$ et $V_2$ les valeurs mesurées en ces points.

D'après les observations précédentes :

- $V_2$-$V_1$ permet d'estimer le déséquilibre entre l'entrée d'aire de contact et la sortie. Cette valeur sera principalement liée à la composante Fx. Une estimation de Fx est donnée par $f_x(V_2$-$rV_1)$ où r est un coefficient réel positif et $f_x$ une fonction continue. Le coefficient r permet de prendre en compte une éventuelle dissymétrie de fonctionnement du capteur. Il est déterminé par exemple de manière à optimiser le coefficient de corrélation entre Fx et $(V_2$-$rV_1)$.

- $V_c$-$(V_1$+$V_2)$ permet d'estimer la différence entre le passage dans l'aire de contact et l'extérieur de l'aire de contact. Le résultat est ici principalement lié à Fz. Une estimation de Fz est donnée par $f_z(V_c$-$(s_1V_1$+$s_2V_2))$ où $s_1$, $s_2$ sont des coefficients réels positifs et $f_z$ une fonction continue. Les coefficients $s_1$ et $s_2$ sont déterminés par exemple de manière à optimiser le coefficient de corrélation entre Fz et $V_c$-$(s_1V_1$+$s_2V_2)$.

- $V_c+V_1+V_2$ donne une indication sur l'extension globale du flanc. Cette valeur sera principalement liée à la composante Fy de la force appliquée. Une estimation de Fy est donnée par $f_y(V_c+u_1V_1+u_2V_2)$ où $u_1$ et $u_2$ sont des coefficients réels positifs et $f_y$ une fonction continue. Les coefficients $u_1$ et $u_2$ sont déterminés par exemple de manière à optimiser le coefficient de corrélation entre Fy et $V_c+u_1V_1+u_2V_2$.

Dans cette détermination, on estime trois composantes (Fx, Fy, Fz) à partir de trois mesures d'extension circonférentielle.Cette première configuration simple peut ne pas s'avérer suffisante pour permettre une estimation de l'adhérence maximale.

Détermination 2 :

On souhaite estimer les composantes des efforts appliqués dans l'aire de contact et le couple d'auto-alignement à partir de mesures de l'extension circonférentielle d'un flanc du pneumatique mesurée en cinq azimuts. Dans ce cas particulier, la détermination des trois composantes d'une résultante d'efforts exercés par la chaussée sur l'aire de contact d'un pneumatique et du couple d'auto-alignement généré par le pneu est déduite d'au moins cinq mesures de variation de distance circonférentielle (extension ou contraction) effectuées dans au moins un flanc du pneu, en cinq points fixes dans l'espace, situés à des azimuts différents le long de la circonférence, puis ledit coefficient d'adhérence μ est déduit de la détermination des trois composantes d'une résultante d'efforts exercés par la chaussée sur l'aire de contact d'un pneumatique et du couple d'auto-alignement généré par le pneu. Les azimuts de mesure sont choisis de la manière suivante :

- Un des azimuts correspond au milieu de l'aire de contact (azimut 180°). Soit $V_c$ la valeur mesurée à ce point.

- Deux autres azimuts sont symétriques par rapport à l'azimut du centre de l'aire de contact. (180°+α° et 180°-α°). Soient $V_1$ et $V_2$ les valeurs mesurées en ces points.

- Les deux derniers azimuts sont symétriques par rapport à l'azimut du centre de l'aire de contact. (180°+β° et 180°-β°). Soient $V_3$ et $V_4$ les valeurs mesurées en ces points.

Des combinaisons de même nature mais un peu plus complexes que celles exposées dans l'exemple 1 permettent dans ce cas de déterminer les composantes Fx, Fy, Fz et N y compris dans les cas où le couple d'auto-alignement n'est pas uniquement dépendant des composantes Fx, Fy et Fz.

Des vérifications expérimentales ont permis de se rendre compte que cette configuration de mesure donne en outre la possibilité de distinguer les effets de Fy et les effets du carrossage ; par conséquent, dans une mise en oeuvre tout particulièrement avantageuse, la méthode est valide aussi dans des conditions de carrossage significativement non nul et on peut évaluer l'angle de carrossage simultanément aux composantes Fx, Fy, Fz et N.

Considérons maintenant le cas où les mesures sont réalisées sur les deux flancs.

Détermination 3 :

On souhaite estimer les composantes des efforts appliqués dans l'aire de contact et le couple d'auto-alignement à partir de mesures de l'extension circonférentielle des deux flancs du pneumatique mesurée en deux azimuts sur chaque flanc. Les azimuts de mesure sont choisis de façon symétrique par rapport à l'azimut du centre de l'aire de contact (180°+α°et 180°-α°). α doit être différent de $\alpha_0$ pour pouvoir estimer Fz. Soient $V_1^1$ et $V_2^1$ les valeurs mesurées à ces azimuts sur le premier flanc, et $V_1^2$ et $V_2^2$ les valeurs mesurées à ces azimuts sur le second flanc.

Grâce à ces quatre valeurs, il est possible de déterminer les composantes en utilisant la décomposition suivant les parités en azimut et en flanc :

- $V_1^1+V_1^2+V_2^1+V_2^2$ donne la composante paire en azimut et en flanc. Cette combinaison est donc directement liée à Fz. Une estimation de Fz est donnée par $f_z(a_1V_1^1+a_2V_2^1+b_1V_1^2+b_2V_2^2)$ où $a_1$, $a_2$, $b_1$ et $b_2$ sont des réels positifs et $f_z$ une fonction continue. Les coefficients $a_1$, $a_2$, $b_1$ et $b_2$ sont par exemple déterminés de manière à optimiser le coefficient de corrélation entre Fz et $a_1V_1^1+a_2V_1^2+b_1V_1^2+b_2V_2^2$.

- $V_1^1+V_1^2-(V_1^2+V_2^2)$ donne la composante impaire en azimut et paire en flanc. Cette combinaison est donc directement liée à Fx. Une estimation de Fx est donnée par $f_x(c_1V_1^1-c_2V_1^2+d_1V_1^2-d_2V_2^2)$ où $c_1$, $c_2$, $d_1$ et $d_2$ sont des réels positifs et $f_x$ une fonction continue. Les coefficients $c_1$, $c_2$, $d_1$ et $d_2$ sont par exemple déterminés de manière à optimiser le coefficient de corrélation entre Fx et $c_1V_1^1-c_2V_1^2+d_1V_1^2-d_2V_2^2$

- $V_1^1-V_1^2+(V_2^1-V_2^2)$ donne la composante paire en azimut et impaire en flanc. Cette combinaison est donc directement liée à Fy. Une estimation de Fy est donnée par $f_y(e_1V_1^1+e_2V_2^1-f_1V_1^2-f_2V_2^2)$ où $e_1$, $e_2$, $f_1$ et $f_2$ sont des réels positifs et $f_y$ une fonction continue. Les coefficients $e_1$, $e_2$, $f_1$ et $f_2$ sont par exemple déterminés de manière à optimiser le coefficient de corrélation entre Fy et $e_1V_1^1+e_2V_2^1-f_1V_1^2-f_2V_2^2$

- $V_1^1-V_1^2-(V_2^1-V_2^2)$ donne la composante impaire en azimut et impaire en flanc. Cette combinaison est donc directement liée à N. Une estimation de N est donnée par $f_n(g_1V_1^1-g_2V_2^1-h_1V_1^2+h_2V_2^2)$ où $g_1$, $g_2$,

$h_1$ et $h_2$ sont des réels positifs et $f_n$ une fonction continue. Les coefficients $g_1$, $g_2$, $h_1$ et $h_2$ sont par exemple déterminés de manière à optimiser le coefficient de corrélation entre N et $g_1V_1^1 - g_2V_2^1 - h_1V_1^2 + h_2V_2^2$

Par ce type de disposition, on utilise au maximum les symétries du pneumatique et pouvons espérer une très bonne précision de la reconstruction des composantes de la sollicitation appliquée dans l'aire de contact.

Détermination 4 :

On souhaite estimer les composantes des efforts appliqués dans l'aire de contact et le couple d'auto-alignement à partir de mesures de l'extension circonférentielle des deux flancs du pneumatique mesurée en trois azimuts sur chaque flanc. Les azimuts de mesure sont choisis de la manière suivante :

- Deux azimuts choisis de façon symétrique par rapport à l'azimut du centre de l'aire de contact ($180°+\alpha°$ et $180°-\alpha°$). Soient $V_1^1$ et $V_2^1$ les valeurs mesurées à ces azimuts sur le premier flanc, et $V_1^2$ et $V_2^2$ les valeurs mesurées à ces azimuts sur le second flanc

- Un azimut correspondant au centre de l'aire de contact. Soient $V_c^1$ et $V_c^2$ les valeurs mesurées à ces azimuts.

Le traitement est similaire à celui de la détermination 3. Les valeurs $V_c^1$ et $V_c^2$ permettent une certaine redondance de l'information mais surtout une meilleure estimation de la composante Fz.

Dans le cas ou $\alpha$ est pris égal à $\alpha_0$, on obtient l'information sur Fz grâce à $V_c^1$ et $V_c^2$ et l'information sur Fx, Fy et N par $V_1^1$, $V_2^1$, $V_2^1$ et $V_2^2$. On utilise ainsi une possibilité supplémentaire de découplage des différentes contributions.

Avantageusement, dans le but d'affiner les estimations des composantes des efforts et de prendre en compte le fonctionnement non linéaire du pneu, la méthode décrite fait appel à des fonctions de transfert plus évoluées pour relier les mesures aux estimations des efforts. Toute fonction d'interpolation permettant d'établir un lien entre les grandeurs mesurées et les valeurs des composantes de la sollicitation appliquée peut être utilisée dans ce cadre.

Bien que tous les exemples listés ici utilisent des azimuts de mesure choisis pour tirer parti au mieux des symétries du pneu et faciliter la reconstruction, le choix de la position de azimuts auxquels les valeurs sont mesurées est libre (la symétrie des azimuts n'est pas en soi obligatoire) car toute combinaison d'un nombre suffisant de mesures permet une estimation des composantes de la sollicitation appliquée. Il est possible, dans ce cas de rechercher directement les fonctions donnant les composantes Fx, Fy, Fz, N et $\gamma$ en fonction des mesures d'extension circonférentielle du ou des flancs en des azimuts connus. La détermination des fonctions de transfert n'est plus nécessairement basée sur l'analyse de la mécanique du pneumatique mais sur la réponse du pneumatique en terme d'extension circonférentielle du ou des flancs aux efforts qu'il subit.

Que les azimuts de mesure soient choisis grâce à une analyse physique ou décidés de manière plus arbitraire, les réseaux de neurones semblent bien adaptés pour établir une fonction de transfert entre les mesures réalisées et les composantes des efforts Fx, Fy , Fz et N. Parmi les schémas les plus simples applicables, on peut retenir l'utilisation de réseaux à une couche de neurones cachés et une couche de neurones de sortie. Ces neurones cachés utilisent une fonction de transfert sigmoïde. Les neurones de sortie utilisent quant à eux une fonction de transfert linéaire (figure 15). La propriété de parcimonie de ce type de réseau employé comme approximateur est ici très intéressante. Il est possible d'utiliser un réseau par composante à estimer ou un réseau permettant grâce à plusieurs sorties d'estimer toutes les composantes.

Si les azimuts de mesure ont été choisis de manière à tirer parti des symétries ou de remarques physiques, il peut être intéressant de réaliser des combinaisons linéaires entre les grandeurs avant l'entrée dans le réseau. Dans ce cas, une analyse en composantes principales permettra de déterminer de façon judicieuse les coefficients de ces combinaisons et simplifiera le réseau de neurones nécessaire. On obtient l'architecture décrite sur la figure 16.

Concrètement, on opère de la façon suivante :

- La première étape consiste après avoir déterminé les azimuts de mesure à recueillir les valeurs de l'extension circonférentielle du ou des flancs lors de sollicitations variées du pneumatique choisies de façon à couvrir tout le domaine dans lequel l'évaluation des efforts sera permise en utilisation normale. Les sollicitations choisies doivent aussi mettre en oeuvre tous les couplages susceptibles d'être rencontrés lors d'une utilisation normale. L'ensemble de valeurs mesurées et des efforts associés (obtenus par un autre moyen de mesure) constitue la base d'apprentissage.

- La seconde étape consiste à réaliser l'apprentissage des poids du réseau sur la base ainsi constituée. A l'issue de cette phase, on dispose des fonctions de transfert.

- Une troisième étape consiste à tester les fonctions de transfert en confrontant les estimations des composantes d'effort aux efforts indiqués par un autre moyen de mesure.

Outre les réseaux de neurones, il est possible d'employer par exemple des fonctions polynomiales.

Dans le cas où la pression de gonflage du pneumatique est susceptible de changer au cours du temps, il peut être très utile, en fonction de la précision souhaitée pour la mesure des composantes recherchées, de prendre en compte les variations de pression.

Une première manière de procéder consiste à corriger les efforts estimés en sortie de fonction de transfert en fonction de la pression. Il est ainsi possible de réaliser une correction au premier ordre. En effet, soit une sollicitation appliquée sur le pneu dans le cas d'une fonction de transfert ne prenant pas en compte la pression. Si la pression est double de la pression de référence (à laquelle la fonction de transfert a été établie), la fonction de transfert verra environ deux fois moins de déformations mesurées en entrée que pour la pression de référence. Elle évaluera donc des efforts deux fois plus faibles que les efforts réellement appliqués. Il convient de multiplier par deux les efforts estimés.

Toutefois, l'approche la plus précise consiste à introduire la pression comme paramètre dans les fonctions de transfert. Ceci implique :

♦ De réaliser l'apprentissage de la ou des fonctions de transfert sur une base d'apprentissage contenant des cas de sollicitation du pneumatique sous différentes conditions de pression de gonflage couvrant le domaine de fonctionnement souhaité.
♦ De disposer d'une mesure ou d'une estimation de la pression de gonflage.

De manière non limitative, on décrit ci-dessous deux manières de connaître la pression.

La première consiste à utiliser une mesure de pression donnée par un capteur de pression différent des capteurs spécifiques de l'invention. La valeur de pression mesurée est alors fournie au système, en plus des valeurs de déformations aux azimuts à la ou aux fonctions de transfert. La figure 17a schématise l'architecture associée.

La seconde approche consiste à estimer la pression de gonflage à partir des mesures de déformation circonférentielle des flancs. En effet, les signaux de déformation présentent une composante structurale et une composante pneumatique ce qui permet par leur analyse de capturer une information sur la pression de gonflage.

Cette façon de faire nécessite de déterminer une fonction de transfert prenant en entrée les mesures de déformation aux azimuts souhaités et donnant, sur le domaine de fonctionnement désiré, une estimation de la pression de gonflage. La même méthodologie que celle présentée précédemment est applicable :

♦ Constitution d'une base d'apprentissage mêlant variations d'efforts appliqués et de pression de gonflage.
♦ Détermination d'une fonction de transfert par apprentissage.

En pratique, si la précision d'une détermination de pression faite comme indiqué ci-dessus est jugée insuffisante pour une mise en oeuvre particulière de l'invention, il est possible de l'améliorer facilement. En effet, l'évolution de la pression dans un pneumatique est un phénomène lent par rapport à la rotation du pneumatique. On peut donc moyenner ou filtrer les estimations de pression de manière à ne conserver que les composantes basses fréquences. On obtient alors une bonne estimation de la pression de gonflage. La figure 17b schématise l'architecture qui résulte de cette approche. En plus de la connaissance des résultantes d'efforts recherchées, la méthode fournit alors, sans capteur supplémentaire, une estimation de la pression de gonflage.

Naturellement, bien d'autres variables (en plus des mesures d'extension circonférentielle) peuvent être prises en compte selon le même principe pour améliorer l'efficacité de cette détermination (par exemple la température du pneumatique).

De manière générale, le nombre de points de mesure peut être plus important que les configurations minimales présentées dans les exemples et permettre un résultat plus précis ou plus sûr du fait de la redondance des informations disponibles.

La mesure de l'extension circonférentielle du ou des flancs du pneumatique peut se faire de n'importe quelle manière, par un dispositif externe ou un dispositif interne au pneu. A titre d'exemple, on décrit ici pour réaliser la mesure de l'extension circonférentielle l'utilisation d'un ou de capteurs placés dans le pneu et donc entraînés en rotation par le pneu.

Ce ou ces capteurs intégrés au pneu, par exemple dans un flanc du pneu, et mesurant localement l'extension circonférentielle du ou des flancs peuvent faire appel à n'importe quel principe physique de mesure. Il peut par exemple s'agir de capteurs diélectriques mesurant une variation de capacité liée à la distance qui sépare deux électrodes. Les électrodes peuvent être constituées d'un fil conducteur placé de manière radiale dans le flanc. Cette disposition permet une mesure de « l'écart fils » par mesure de la capacité entre les électrodes. S'il est actif, le capteur peut être alimenté soit par le véhicule par téléalimentation soit par une batterie embarquée sur la roue ou dans le pneu ou par tout autre moyen. Tout est aussi possible en ce qui concerne la transmission de l'information vers le véhicule, par voie radio ou autre. Le capteur en lui même doit pouvoir fournir une information en continu ou avec une fréquence de rafraîchissement suffisamment rapide par rapport à la période de rotation de la roue.

Cette approche utilisant un capteur intégré au pneu a l'avantage de permettre une connaissance de l'extension circonférentielle du ou des flancs à tous les azimuts du pneumatique puisque un capteur, entraîné par le pneu, explore l'ensemble des azimuts lors d'une rotation de la roue.

La méthode de reconstruction des composantes des efforts étant basée sur la mesure de l'extension circonférentielle à certains azimuts, se pose le problème de la localisation du capteur pour extraire les valeurs aux bons azimuts.

Le capteur est interrogé à une fréquence constante et connue. Il délivre donc un signal temporel de la variation de l'extension circonférentielle locale. Un signal mesuré est présenté en figure 18. Sur ce signal temporel, On reconnaît aisément la signature d'un tour de roue que l'on a observée précédemment (figures 10a, 10b, 11a, 11b, 12a, 12b). Outre la signature de chaque tour de roue, ce signal est bruité. La première opération consiste à réduire ce bruit en appliquant un filtre passe bas dont la fréquence de coupure peut être liée à la vitesse de rotation de la roue.

Plusieurs cas de figure peuvent alors se présenter suivant les équipements disponibles :

- Si l'on dispose d'une mesure de la position angulaire de la roue, il est possible de connaître les instants auxquels le capteur passe à l'azimut de mesure. La lecture des valeurs mesurées à ces instants fournit la valeur de l'extension circonférentielle aux azimuts désirés. Cette mesure de la position angulaire de la roue peut, par exemple être obtenue par un comptage des transitions d'un capteur ABS de vitesse de rotation de la roue.

- Si aucun dispositif externe n'est disponible pour faciliter la localisation du capteur, on ne peut utiliser que le signal du capteur lui-même. L'invention propose d'utiliser le signal du capteur pour estimer la position angulaire de la roue.

Chaque passage du capteur dans l'aire de contact a pour signature une très forte extension circonférentielle des flancs du pneumatique. En utilisant cette observation, il est possible de trouver les instants où le capteur passe au centre de l'aire de contact. La méthode la plus simple pour réaliser cette opération consiste à réaliser un seuillage du signal filtré et à rechercher les maxima parmi les valeurs supérieures à ce seuil (figure 19). Cette approche permet de ne pas détecter les maxima qui ne correspondent pas au passage dans l'aire de contact.

A chaque détermination d'un nouveau passage dans l'aire de contact, la connaissance des instants des derniers passages (au moins 3 passages) permet d'estimer la vitesse de rotation de la roue et son accélération. Grâce à ces estimations, il est possible de reconstruire une évaluation de l'azimut auquel le capteur se trouve en fonction du temps. Il devient alors possible d'extraire des mesures en fonction du temps les valeurs à certains azimuts.

Plusieurs possibilités s'offrent alors pour la mise en oeuvre de la mesure. En effet, la détermination des composantes des efforts nécessite des mesures à plusieurs azimuts.

Une première approche consiste à n'utiliser qu'un capteur sur chaque flanc pour lequel on souhaite avoir des mesures. A chaque passage à une position requise, la valeur donnée par le capteur est prise en compte pour rafraîchir la mesure à l'azimut considéré. En faisant l'hypothèse que les composantes des efforts varient lentement par rapport à la vitesse de rotation de la roue, un seul capteur permet ainsi d'obtenir les mesures à tous les azimuts nécessaires à la reconstruction des efforts. La figure 20 présente ce type de fonctionnement avec un modèle (fonction de transfert) qui nécessite des mesures à trois azimuts (0°, 120° et 240°).

Une deuxième approche consiste à disposer plusieurs capteurs sur la circonférence de façon à ce qu'au moins une fois par tour les capteurs se trouvent simultanément aux azimuts auxquels on désire réaliser une mesure. Il est ainsi possible d'obtenir une image de la déformation du pneu en différents azimuts à un instant donné ce qui ne nécessite plus que les efforts varient lentement par rapport à la rotation de la roue. Une variante de cette approche consiste à disposer les capteurs de manière équi-répartie autour du pneu. Ainsi, dans le cas où l'on a placé N capteurs, la situation où les capteurs sont bien positionnés se produit au moins N fois par tour. La figure 21 présente ce type de fonctionnement avec trois capteurs qui tombent trois fois par tour sur les azimuts où la mesure doit être réalisée (0°, 120° et 240°).

Enfin, il est possible de mixer les approches précédentes.

L'augmentation du nombre de capteurs permet en particulier :

- d'augmenter la fréquence de rafraîchissement de l'estimation des efforts,

- d'augmenter la robustesse vis à vis des variations rapides des composantes des efforts appliqués dans l'aire de contact.

Notons que plusieurs modèles peuvent être déterminés qui prennent en entrée les mesures à des azimuts différents. Même avec un unique capteur, il est ainsi possible d'obtenir plusieurs estimations à chaque tour de roue. La figure 22 donne un exemple dans lequel trois capteurs sont utilisés. Deux fonctions de transfert sont déterminées. La première utilise des mesures à 0°, 120° et 240°, la seconde à 60°, 180° et 300°. Lorsque les capteurs tombent sur les positions de mesures désirées, la fonction de transfert peut être appliquée. En gérant convenablement les capteurs, il est même possible dans ce type de disposition de réaliser une estimation des efforts 6 fois par tour de roue. Ces estimations par plusieurs modèles peuvent être moyennées ou confrontées pour augmenter la précision et diminuer le bruit dans l'estimation des efforts.

La figure 23 résume la démarche de l'invention qui chaîne l'estimation des composantes d'efforts appliquées sur le pneu à partir de mesures d'extension circonférentielle et l'estimation du niveau d'adhérence à partir de ces données.

Revenons au domaine D. Celui-ci est plus ou moins étendu selon les pneus (et pouvant même ne pas exister) sur la figure 9 correspond à une zone où il peut exister plusieurs quadruplets (Fx, Fy, Fz, μ) dont l'image par f est le même couple d'auto-alignement N. Il n'est par conséquent pas possible de trouver directement une fonction inverse g sur ce domaine.

Il est néanmoins possible, en utilisant une technique de codage (par exemple une technique de codage semi-distribué), de proposer plusieurs valeurs de μ lorsqu'un quadruplet Fx, Fy, Fz, N de ce domaine est rencontré. A chaque valeur de μ proposée, on peut alors associer une probabilité. Si elles permettent d'améliorer les résultats, ces méthodes présentent toujours le problème du choix de la bonne valeur de μ à retenir.

Des propriétés de continuité dans le temps peuvent aider à choisir. Imaginons que, au cours du temps, le point de fonctionnement de l'ensemble monté passe du domaine C au domaine B puis D (figure 9). Dans les domaines C et B, l'estimation de μ était proche de $\mu_l$. Imaginons que, dans le domaine D, on soit subitement confronté à deux valeurs possibles de μ. Par continuité, on peut choisir la valeur la plus proche de $\mu_l$ en faisant l'hypothèse que le sol n'évoluerait pas si rapidement. Toutefois, si l'indétermination subsiste après quelques évaluations supplémentaires, il se peut réellement que le sol ait changé. Dans ce cas, on ne peut écarter la valeur différente de μl. Il est alors à nouveau nécessaire de faire un choix.

Comme on le voit, l'existence dans certains cas de ce domaine non inversible peut rendre la méthode exposée précédemment difficile à utiliser (par exemple pour des raisons de sécurité). Des méthodes levant à coup sur cette indétermination sont par conséquent particulièrement intéressantes.

Le déplacement du point d'application des forces dans l'aire de contact peut avoir lieu suivant la direction X d'une valeur dx ou la direction Y d'une valeur dy. Le fait de ne mesurer que Fx, Fy , Fz et N ne permet pas de déterminer indépendamment dx et dy. Il en résulte une indétermination sur la position, indétermination qui peut créer le problème de non inversibilité.

On a pu montrer que la connaissance d'informations supplémentaires permettrait de rendre le domaine D inversible. Considérons par exemple l'approche suivante. Le couple d'auto-alignement N peut se décomposer de la manière suivante :

$$N= F_y.dx\text{-}F_x.dy = N_y - N_x,$$

dx et dy étant les coordonnées du point d'application de la résultante des forces Fx et Fy.

Le fait d'utiliser $N_x$ et Ny à la place de N permet de trouver une fonction définie sur l'ensemble du domaine de sollicitations créant un glissement partiel donnant une estimation de μ. Il n'y a dans ce cas aucune ambiguïté sur les valeurs de μ dans tout le domaine. Connaître à la fois $N_x$, $N_y$ et les efforts permet de localiser le point d'application des forces dans l'aire de contact (les valeurs dx et dy ci-dessus) et d'en déduire μ.

Pour obtenir les valeurs de $N_x$ et $N_y$, on peut par exemple mesurer les trois couples L, M, N. (L : moment autour de l'axe X, M autour de l'axe Y et N autour de Z). les valeurs de dx et de dy sont alors obtenues comme solution d'un système linéaire. En effet, si dx, dy et dz sont les coordonnées du point d'application de la force, on peut écrire :

$$L=F_z.dy\text{-}F_y.dz$$

$$M=F_x.dz\text{-}F_z.dx$$

$$N=F_y.dx\text{-}F_x.dy$$

En considérant l'angle de carrossage comme petit, dz est très fortement lié à la charge Fz du pneumatique. Il est aussi possible de prendre en compte les corrections à introduire en fonction des efforts Fx et Fy appliqués. Pour un pneumatique donné dans des conditions connues (pression) le lien dz = f(Fx, Fy, Fz, P) est connu avec une assez bonne précision par exemple par l'intermédiaire d'une fonction d'approximation tel un réseau de neurones.

Dans le cas d'une sollicitation principalement dans la direction Fx, on utilise la seconde relation pour obtenir $dx = \dfrac{Fx.dz - M}{Fz}$ . dy est alors obtenu par la troisième relation $dy = \dfrac{Fy.dx - N}{Fx}$ .

Dans le cas d'une sollicitation principalement dans la direction Fy, on utilise la première relation pour obtenir $dy = \dfrac{L + Fy.dz}{Fz}$ .dx est alors obtenu par la troisième relation $dx = \dfrac{N + Fx.dy}{Fy}$ .

Dans le cas de sollicitations couplées, il est possible d'utiliser l'une ou l'autre des relations ou les deux de manière à augmenter la précision. Connaissant dx et dy, l'éventuelle indétermination est levée.

La mise en oeuvre particulière de la méthode proposée pour estimer le coefficient d'adhérence maxi nécessite de solliciter le pneu par des efforts Fx, Fy ou les deux combinés. En effet, la démarche présentée ci-dessus suppose qu'il existe une zone de glissement dans l'aire de contact. Grâce à cette méthode, on obtient une estimation de la limite d'adhérence avant de l'atteindre. Toutefois, lorsque le pneu est très peu sollicité (absence de glissement de l'aire de contact), l'estimation est plus problématique ou du moins est de préférence accompagnée d'un indice de confiance déterminé par un apprentissage comme indiqué ci-dessous.

♦ Dans une phase d'apprentissage, on détermine en plus du modèle μ = g(Fx, Fy, Fz, N,...) un modèle $N_{adh}$ = f(Fx, Fy, Fz,...) qui représente la valeur de N lorsque le pneu est parfaitement adhérent (μ très grand).
♦ Dans une phase d'utilisation, Fx, Fy,Fz et N sont estimés à l'aide de la mesure d'extension circonférentielle. Fx, Fy et Fz, permettent de déterminer Nadh. On estime un indice de confiance en choisissant un seuil et en comparant N et $N_{adh}$ comme suit :

♦ Si |N|-[$N_{adh}$]<Seuil, alors le contact du pneu au sol est considéré comme adhérent et la détermination de μ est jugée non fiable.
♦ Si |N|-[$N_{adh}$]>Seuil, alors le la zone de glissement dans le contact est suffisante et l'estimation de μ est fiable.

Une valeur de seuil de l'ordre de 1 m.daN sur une enveloppe tourisme permet de déterminer de façon suffisamment fiable si le modèle est utilisable. Cette valeur correspond à utiliser le modèle à partir d'un pourcentage d'utilisation du potentiel maxi de l'ordre de 50 %.
Pour obtenir une grandeur correctement évaluée dès les basses sollicitations, il est proposé de s'intéresser au pourcentage de potentiel d'adhérence utilisé défini de la façon suivante :

$$p_u = \frac{\mu_{utilisé}}{\mu} = \frac{\sqrt{F_x^2 + F_y^2}}{\mu .F_z}$$

Cette grandeur présente l'intérêt d'être plus facilement correctement estimée en grandeur absolue quelle que soit la sollicitation, même faible, appliquée au pneu. On l'obtient de manière directe par exemple par un réseau de neurones en appliquant la démarche présentée pour l'estimation de μ. La figure 19 présente un exemple de reconstruction du potentiel d'adhérence maxi et du pourcentage de potentiel utilisé. Le couple moteur ou freineur (glissement lié à Fx) et la force transversale (dérive liée à Fy) varient au cours du temps ainsi que le sol sur lequel roule le véhicule. La charge Fz est imposée. Lorsque la sollicitation du pneu est faible (Fx et Fy faibles simultanément) par exemple au temps 4 s, la qualité de l'estimation du potentiel d'adhérence maxi chute. L'estimation du pourcentage de potentiel utilisé reste quant à elle tout à fait correcte.

Dans ce cas, une mise en oeuvre particulière de la méthode proposée consiste à établir une fonction de transfert entre les mesures, les trois composantes d'une résultante d'efforts exercés par la chaussée sur l'aire de contact d'un pneumatique et le couple d'auto-alignement généré par le pneu, et le pourcentage de potentiel d'adhérence utilisé défini par

$$p_u = \frac{\mu_{utilisé}}{\mu} = \frac{\sqrt{F_x^2 + F_y^2}}{\mu .F_z} \quad \text{par les étapes}$$

suivantes :

- constitution d'une base de données contenant Fx, Fy, Fz, N et $p_u$ pour un ensemble de sollicitations du pneu sur des sols présentant des coefficients d'adhérence différents, les paramètres Fx, Fy, Fz et μ étant imposées au pneu, la valeur du couple d'auto-alignement N étant mesurée,
- détermination par apprentissage des poids d'un réseau de neurones permettant de reconstruire directement $p_u$ à partir de la connaissance de Fx, Fy, Fz et N.

Dans le cadre d'une utilisation par un système embarqué dans un véhicule (système mécatronique, par exemple de type ESP ou ABS), il est intéressant de disposer d'une grandeur définie sur tout le domaine d'utilisation. Il est par exemple envisageable d'utiliser le pourcentage de potentiel d'adhérence utilisé pour affiner les mécanismes de régulation des systèmes ABS ou ESP.

**Revendications**

1. Méthode de détermination du coefficient d'adhérence μ dans l'aire de contact d'un pneu sur une chaussée, comportant les étapes suivantes :

• déterminer les trois composant Fx, Fy, Fz d'une résultante d'efforts exercés par la chaussée sur l'aire de contact d'un pneumatique et déterminer le couple d'auto-alignement N généré par le pneu,
• traiter les signaux d'évaluation des trois composantes d'une résultante d'efforts exercés par la chaussée sur l'aire de contact d'un pneumatique et du couple d'auto-alignement généré par le pneu de façon à en extraire ledit coefficient d'adhérence μ.

2. Méthode selon la revendication 1, dans laquelle la détermination des trois composantes d'une résultante d'efforts exercés par la chaussée sur l'aire de contact d'un pneumatique et du couple d'auto-alignement généré par le pneu comporte les étapes suivantes :

• sélectionner plusieurs points fixes dans l'espace, situés à des azimuts différents le long de la circonférence dans au moins un flanc du pneu,

• effectuer autant de mesures de variation de distance circonférentielle (extension

ou contraction) à ces points fixes lorsque le pneu roule sur la chaussée

• traiter les signaux de mesure de façon à en extraire les trois composantes d'une résultante d'efforts exercés par la chaussée sur l'aire de contact d'un pneumatique et le couple d'auto-alignement généré par le pneu.

**3.** Méthode selon la revendication 2, dans laquelle la détermination des trois composantes d'une résultante d'efforts exercés par la chaussée sur l'aire de contact d'un pneumatique et du couple d'auto-alignement généré par le pneu est déduite d'au moins cinq mesures de variation de distance circonférentielle (extension ou contraction) effectuées dans au moins un flanc du pneu, en cinq points fixes dans l'espace, situés à des azimuts différents le long de la circonférence, puis ledit coefficient d'adhérence $\mu$ est déduit de la détermination des trois composantes d'une résultante d'efforts exercés par la chaussée sur l'aire de contact d'un pneumatique et du couple d'auto-alignement généré par le pneu.

**4.** Méthode selon la revendication 2, **caractérisée en ce que** la mesure de la variation circonférentielle est effectuée par au moins un capteur intégré dans un flanc du pneu, le signal délivré par ledit capteur étant traité pour relever sa valeur en plusieurs azimuts correspondant auxdits points fixes.

**5.** Méthode selon la revendication 2, **caractérisée en ce que** la mesure de la variation circonférentielle est effectuée par autant de capteurs que d'azimuts à observer, les capteurs étant externes au pneu et disposés dans l'espace fixe.

**6.** Méthode selon l'une des revendications 2 à 5, **caractérisée en ce que** l'on établit une fonction de transfert entre les mesures, les trois composantes d'une résultante d'efforts exercés par la chaussée sur l'aire de contact d'un pneumatique et le couple d'auto-alignement généré par le pneu, et le coefficient d'adhérence maxi par les étapes suivantes :

- constitution d'une base de données contenant Fx, Fy, Fz, N et $\mu$ pour un ensemble de sollicitations du pneu sur des sols présentant des coefficients d'adhérence différents, les paramètres Fx, Fy, Fz et $\mu$ étant imposées au pneu, la valeur du couple d'auto-alignement N étant mesurée,
- détermination par apprentissage des poids d'un réseau de neurones permettant de reconstruire $\mu$ à partir de la connaissance de Fx, Fy, Fz et N.

**7.** Méthode selon l'une des revendications 2 à 5, **caractérisée en ce que** l'on établit une fonction de transfert entre les mesures, les trois composantes d'une résultante d'efforts exercés par la chaussée sur l'aire de contact d'un pneumatique et le couple d'auto-alignement généré par le pneu, et le pourcentage de potentiel d'adhérence utilisé défini par

$$p_u = \frac{\mu_{utilisé}}{\mu} = \frac{\sqrt{F_x^2 + F_y^2}}{\mu \cdot F_z} \quad \text{par les étapes}$$

suivantes :

- constitution d'une base de données contenant Fx, Fy, Fz, N et Pu pour un ensemble de sollicitations du pneu sur des sols présentant des coefficients d'adhérence différents, les paramètres Fx, Fy, Fz et $\mu$ étant imposées au pneu, la valeur du couple d'auto-alignement N étant mesurée,
- détermination par apprentissage des poids d'un réseau de neurones permettant de reconstruire directement $p_u$ à partir de la connaissance de Fx, Fy, Fz et N.

**8.** Méthode selon l'une des revendications 2 à 5, **caractérisée en ce que** l'on établit une fonction de transfert entre les mesures, les trois composantes d'une résultante d'efforts exercés par la chaussée sur l'aire de contact d'un pneumatique et le couple d'auto-alignement généré par le pneu, et le coefficient d'adhérence maxi par les étapes suivantes :

- constitution d'une base de données contenant Fx, Fy, Fz, N et $\mu$ pour un ensemble de sollicitations du pneu sur des sols présentant des coefficients d'adhérence différents, les paramètres Fx, Fy, Fz et $\mu$ étant imposées au pneu, la valeur du couple d'auto-alignement N étant mesurée,

- calcul des valeurs réduites $\dfrac{Fx}{Fz}, \dfrac{Fy}{Fz}, \dfrac{N}{Fz},$
- détermination par apprentissage des poids d'un réseau de neurones permettant de reconstruire $\mu$ à partir de la connaissance de

$$\frac{Fx}{Fz}, \frac{Fy}{Fz}, \frac{N}{Fz}.$$

**9.** Méthode selon l'une des revendications 2 à 5 dans laquelle, étant posé que

$$N = F_y.dx - F_x.dy = N_y - N_x$$

où dx est la distance du point d'application de la force Fy au plan vertical passant par le centre de l'aire de contact et orthogonal à l'axe X, où dy est la distance du point d'application de la force Fx au plan vertical passant par le centre de l'aire de contact et orthogonal à l'axe Y,

les valeurs de $N_x$ et $N_y$ sont obtenues à partir des mesures des trois couples L, M, N, L étant le moment autour de l'axe X, M le moment autour de l'axe Y et N le moment autour de Z.

10. Méthode selon la revendication 6 ou 7, utilisant un réseau de neurones du type perceptron.

11. Méthode selon l'une des revendications 2 à 9, **caractérisée en ce que** l'on estime la variation circonférentielle par la mesure de la distance entre les fils de la nappe carcasse dans les flancs.

12. Méthode selon l'une des revendications 2 à 10, **caractérisée en ce que** l'on estime la variation circonférentielle par la mesure de la distance entre des fils formant un capteur mesurant une variation de capacité liée à la distance qui sépare deux électrodes.

13. Méthode selon la revendication 2, **caractérisée en ce qu'**on utilise au moins trois points fixes dans l'espace définis tels que :

   • un des points corresponde à l'azimut du centre de l'aire de contact ou l'azimut du point opposé à l'aire de contact ;
   • les deux autres points soient symétriques par rapport à un plan vertical passant par le centre de l'aire de contact.

14. Méthode selon la revendication 2 dans laquelle, les azimuts de mesure étant choisis de façon symétrique par rapport à l'azimut du centre de l'aire de contact ($180°+\alpha°$ et $180°-\alpha°$), avec $\alpha$ différent de $\alpha_0$, où $\alpha_0$ est l'azimut en entrée de l'aire de contact, $V_1^1$ et $V_2^1$ étant les valeurs mesurées à ces azimuts sur le premier flanc, et $V_1^2$ et $V_2^2$ les valeurs mesurées à ces azimuts sur le second flanc, :

   • $f_z(a_1)V_1^1+a_2 V_2^1+b_1 V_1^2+b_2 V_2^2)$ où $a_1$, $a_2$, $b_1$ et $b_2$ sont des coefficients réels positifs et $f_z$ une fonction continue est une estimation de la composante Fz,
   • $f_x(c_1V_1^1-c_2V_2^1+d_1V_1^2-d_2V_2^2)$ où $c_1$, $c_2$, $d_1$ et $d_2$ sont des coefficients réels positifs et $f_x$ une fonction continue, est une estimation de la composante Fx,
   • $f_y(e_1V_1^1+e_2V_2^1-f_1V_1^2-f_2V_2^2)$ où $e_1$, $e_2$, $f_1$ et $f_2$

sont des coefficients réels positifs et $f_y$ une fonction continue est une estimation de la composante Fy,
   • $f_n(g_1V_1^1-g_2V_2^1-h_1V_1^2+h_2V_2^2)$ où $g_1$, $g_2$, $h_1$ et $h_2$ sont des coefficients réels positifs et $f_n$ une fonction continue est une estimation du couple d'auto-alignement N.

15. Méthode selon la revendication 2 dans laquelle, les azimuts de mesure étant choisis de façon symétrique par rapport à l'azimut du centre de l'aire de contact ($180°+\alpha°$ et $180°-\alpha°$), avec $\alpha$ différent de $\alpha_0$, où $\alpha_0$ est l'azimut en entrée de l'aire de contact, et $V_1$ et $V_2$ étant les valeurs mesurées en ces autres azimuts,

   • $f_x(V_2-rV_1)$ où r est un coefficient réel positif et $f_x$ une fonction continue est une estimation de Fx,
   • $f_z(V_c-(s_1V_1+s_2V_2))$ où $S_1$ et $S_2$ sont des coefficients réels positifs et $f_z$ une fonction continue est une estimation de Fz,
   • $fy(V_c+u_1V_1+u_2V_2)$ où $u_1$ et $u_2$ sont des coefficients réels positifs et $f_y$ une fonction continue est une estimation de Fy,

16. Méthode selon l'une quelconque des revendications précédentes dans laquelle on détermine un indice de confiance comme suit :

   ♦ Dans une phase d'apprentissage, on détermine un modèle $\mu$ = g(Fx, Fy, Fz, N,...) un modèle $N_{adh}$= f(Fx, Fy, Fz,...) représentant la valeur de N lorsque le pneu est parfaitement adhérent ;
   ♦ Dans une phase d'utilisation, Fx, Fy, Fz et N sont estimés à l'aide de la mesure d'extension circonférentielle et on détermine Nadh ;

   ♦ Si $|N|-[N_{adh}|<$Seuil, alors le contact du pneu au sol est considéré comme adhérent et la détermination de $\mu$ est jugée non fiable.
   ♦ Si $|N|-[N_{adh}|>$Seuil, alors le la zone de glissement dans le contact est suffisante et l'estimation de $\mu$ est fiable.

**Claims**

1. Method of determining the grip coefficient $\mu$ in the contact area of a tyre on a road, including the following steps:

   • determining the three components Fx, Fy, Fz of a resultant of forces which are exerted by the road on the contact area of a tyre and determining the self-alignment torque generated by the tyre,
   • processing the evaluation signals of the three components of a resultant of forces which are exerted by the road on the contact area of a tyre and of the self-alignment torque generated by the tyre so as to extract the said grip coefficient $\mu$ from them.

2. Method according to Claim 1, in which the determination of the three components of a resultant of forces which are exerted by the road on the contact area of a tyre and of the self-alignment torque generated by the tyre includes the following steps:

   • selecting a plurality of fixed points in space, which lie at different azimuths along the circumference in at least one sidewall of the tyre,
   • carrying out a corresponding number of measurements of circumferential distance variation (extension or contraction) at these fixed points when the tyre is rolling on the road,
   • processing the measurement signals so as to extract the three components of a resultant of forces which are exerted by the road on the contact area of a tyre and the self-alignment torque generated by the tyre from them.

3. Method according to Claim 2, in which the determination of the three components of a resultant of forces which are exerted by the road on the contact area of a tyre and of the self-alignment torque generated by the tyre is derived from at least five measurements of circumferential distance variation (extension or contraction) carried out in at least one sidewall of the tyre, at five fixed points in space which lie at different azimuths along the circumference, then the said grip coefficient $\mu$ is derived from the determination of the three components of a resultant of forces which are exerted by the road on the contact area of a tyre and of the self alignment torque generated by the tyre.

4. Method according to Claim 2, **characterised in that** the measurement of the circumferential variation is carried out by at least one sensor integrated in a sidewall of the tyre, the signal delivered by the said sensor being processed in order to read its value at a plurality of azimuths corresponding to the said fixed points.

5. Method according to Claim 2, **characterised in that** the measurement of the circumferential variation is carried out by as many sensors as there are azimuths to be observed, the sensors being external to the tyre and arranged in fixed space.

6. Method according to one of Claims 2 to 5, **characterised in that** a transfer function is established between the measurements, the three components of a resultant of forces which are exerted by the road on the contact area of a tyre and the self-alignment torque generated by the tyre, and the maximum grip coefficient by the following steps:

   - compiling a data base containing Fx, Fy, Fz, N and $\mu$ for a set of constraints of the tyre on ground surfaces having different grip coefficients, the parameters Fx, Fy, Fz, and $\mu$ being imposed on the tyre, the value of the self-alignment torque N being measured,
   - by training, determining the weightings of a neural network making it possible to reconstruct $\mu$ on the basis of knowledge of Fx, Fy, Fz and N.

7. Method according to one of Claims 2 to 5, **characterised in that** a transfer function is established between the measurements, the three components of a resultant of forces which are exerted by the road on the contact area of a tyre and the self-alignment torque generated by the tyre, and the percentage of grip potential being used, which is defined *by*

$$p_u = \frac{\mu_{used}}{\mu} = \frac{\sqrt{F_x^2 + F_y^2}}{\mu . F_z},$$ by the following steps:

   - compiling a data base containing Fx, Fy, Fz, N and $p_u$ for a set of constraints of the tyre on ground surfaces having different grip coefficients, the parameters Fx, Fy, Fz, and $\mu$ being imposed on the tyre, the value of the self-alignment torque N being measured,
   - by training, determining the weightings of a neural network making it possible to reconstruct $p_u$ directly on the basis of knowledge of Fx, Fy, Fz and N:

8. Method according to one of Claims 2 to 5, **characterised in that** a transfer function is established between the measurements, the three components of a resultant of forces which are exerted by the road on the contact area of a tyre and the self-alignment torque generated by the tyre, and the maximum grip coefficient by the following steps:

   - compiling a data base containing Fx, Fy, Fz, N and $\mu$ for a set of constraints of the tyre on ground surfaces having different grip coefficients, the parameters Fx, Fy, Fz, and $\mu$ being imposed on the tyre, the value of the self-alignment torque N being measured,

   - calculating the reduced values $\frac{Fx}{Fz}, \frac{Fy}{Fz}, \frac{N}{Fz},$
   - by training, determining the weightings of a neural network making it possible to reconstruct

μ on the basis of knowledge of

$$\frac{Fx}{Fz}, \frac{Fy}{Fz}, \frac{N}{Fz}.$$

9. Method according to one of Claims 2 to 5 in which, setting

$$N = F_y.dx - F_x.dy = N_y - N_x$$

where dx is the distance from the point of application of the force Fy to the vertical plane which passes through the centre of the contact area and is orthogonal to the X axis,
where dy is the distance from the point of application of the force Fx to the vertical plane which passes through the centre of the contact area and is orthogonal to the Y axis,
the values of $N_x$ and $N_y$ are obtained from the measurements of the three torques L, M, N, L being the moment about the X axis, M being the moment about the Y axis and N being the moment about Z.

10. Method according to Claim 6 or 7, using a neural network of the perceptron type.

11. Method according to one of Claims 2 to 9, **characterised in that** the circumferential variation is estimated by measuring the distance between the threads of the carcass ply in the sidewalls.

12. Method according to one of Claims 2 to 10, **characterised in that** the circumferential variation is estimated by measuring the distance between wires forming a sensor which measures a variation in capacitance linked with the distance separating two electrodes.

13. Method according to Claim 2, **characterised in that** at least three fixed points in space are used, which are defined such that:

    • one of the points corresponds to the azimuth of the centre of the contact area or the azimuth of the point opposite to the contact area.
    • the two other points are symmetrical with respect to a vertical plane passing through the centre of the contact area.

14. Method according to Claim 2 in which, the measurement azimuths being selected symmetrically with respect to the azimuth of the centre of the contact area ($180°+\alpha°$ and $180°-\alpha°$), with $\alpha$ different from $\alpha_0$, where $\alpha_0$ is the azimuth at the entry of the contact area, $V_1^1$ and $V_2^1$ being the values measured at these azimuths on the first sidewall and $V_1^2$ and $V_2^2$

being the values measured at these azimuths on the second sidewall:

    • an estimate of the component Fz is provided by $f_z(a_1V_1^1+a_2V_2^1+b_1V_1^2+b_2V_2^2)$,

    where $a_1$, $a_2$, $b_1$ and $b_2$ are positive real coefficients and $f_z$ is a continuous function,

    • an estimate of the component Fx is provided by $fx(c_1V_1^1-c_2V_2^1+d_1V_1^2-d_2V_2^2)$,

    where $c_1$, $c_2$, $d_1$ and $d_2$ are positive real coefficients and $f_x$ is a continuous function,

    • an estimate of the component Fy is provided by $fy(e_1V_1^1+e_2V_2^1-f_1V_1^2-f_2V_2^2)$,

    where $e_1$, $e_2$, $f_1$ and $f_2$ are positive real coefficients and $f_y$ is a continuous function,

    • an estimate of the self-alignment torque N is provided by $f_n(g_1V_1^1-g_2V_2^1-h_1V_1^2+h_2V_2^2)$, where $g_1$, $g_2$, $h_1$ and $h_2$ are positive real coefficients and $f_n$ is a continuous function.

15. Method according to Claim 2 in which, the measurement azimuths being selected symmetrically with respect to the azimuth of the centre of the contact area ($180°+\alpha°$ and $180°-\alpha°$), with $\alpha$ not equal to $\alpha_0$, where $\alpha_0$ is the azimuth at the entry of the contact area, and $V_1$ and $V_2$ being the values measured at these other azimuths,

    • an estimate of Fx is provided by $f_x(V_2-rV_1)$, where r is a positive real coefficient and $f_x$ is a continuous function,
    • an estimate of Fz is provided by $fz(V_c-(S_1V_1+S_2V_2))$, where $s_1$ and $s_2$ are positive real coefficients and $f_z$ is a continuous function,
    • an estimate of Fy is provided by $fy(V_c+u_1V_1+u_2V_2)$, where $u_1$ and $u_2$ are positive real coefficients and $f_y$ is a continuous function,

16. Method according to any one of the preceding claims, in which a confidence index is determined as follows:

    ◆ In a training phase, a model $\mu = g(Fx, Fy, Fz, N,...)$ and a model $N_{grip} = f(Fx, Fy, Fz,...)$ representing the value of N when the tyre is gripping perfectly are determined; [le traducteur a ajouté, à juste titre, le *and* qui est absent de l'original]
    ◆ In a use phase, Fx, Fy, Fz and N are estimated with the aid of the circumferential extension measurement, and Ngrip is determined;
    ◆ If $|N|-[N_{grip}|<$Threshold, then the contact of the tyre on the ground is deemed to be gripping, and the determination of µ is deemed to be unreliable.

♦ If |N|-[N$_{grip}$|>Threshold, then the slip zone in the contact is sufficient and the estimate of µ is reliable.

**Patentansprüche**

1. Verfahren zur Bestimmung des Haftungskoeffizienten µ in der Aufstandsfläche eines Reifens auf einer Fahrbahn, das die folgenden Schritte aufweist:

   - Bestimmen der drei Komponenten Fx, Fy, Fz einer Resultierenden von Kräften, die von der Fahrbahn auf die Aufstandsfläche eines Reifens ausgeübt werden, und Bestimmen des vom Reifen erzeugten Moments der Selbstausrichtung N,
   - Verarbeiten der ermittelten Signale der drei Komponenten einer Resultierenden von Kräften, die von der Fahrbahn auf die Aufstandsfläche eines Reifens ausgeübt werden, und des vom Reifen erzeugten Moments der Selbstausrichtung, um daraus den Haftungskoeffizienten µ, zu gewinnen.

2. Verfahren nach Anspruch 1, bei dem die Bestimmung der drei Komponenten einer Resultierenden von Kräften, die von der Fahrbahn auf die Aufstandsfläche eines Reifens ausgeübt werden, und des vom Reifen erzeugten Moments der Selbstausrichtung, die folgenden Schritte aufweist:

   - Auswählen mehrerer fester Punkte im Raum, die in verschiedenen Azimuten entlang des Umfangs in mindestens einer Flanke des Reifens angeordnet sind,
   - Durchführen ebenso vieler Messungen der Änderung des Umfangsabstands (Ausdehnung oder Zusammenziehen) an diesen festen Punkten, wenn der Reifen auf der Fahrbahn rollt,
   - Verarbeiten der Messsignale, um daraus die drei Komponenten einer Resultierenden von Kräften, die von der Fahrbahn auf die Aufstandsfläche eines Reifens ausgeübt werden, und das vom Reifen erzeugte Moment der Selbstausrichtung zu gewinnen.

3. Verfahren nach Anspruch 2, bei dem die Bestimmung der drei Komponenten einer Resultierenden von Kräften, die von der Fahrbahn auf die Aufstandsfläche eines Reifens ausgeübt werden, und des vom Reifen erzeugten Moments der Selbstausrichtung von mindestens fünf Messungen der Änderung des Umfangsabstands (Ausdehnung oder Zusammenziehen) abgeleitet wird, die in mindestens einer Flanke des Reifens in fünf festen Punkten im Raum in unterschiedlichen Azimuten entlang des Umfangs durchgeführt werden, bei dem dann der Haftungskoeffizient µ von der Bestimmung der drei Komponenten einer Resultierenden von Kräften, die von der Fahrbahn auf die Aufstandsfläche eines Reifens ausgeübt werden, und des vom Reifen erzeugten Moments der Selbstausrichtung abgeleitet wird.

4. Verfahren nach Anspruch 2, **dadurch gekennzeichnet, dass** die Messung der Umfangsänderung von mindestens einem in einer Flanke des Reifens integrierten Sensor durchgeführt wird, wobei das von diesem Sensor gelieferte Signal verarbeitet wird, um seinen Wert in mehreren Azimuten festzustellen, die den festen Punkten entsprechen.

5. Verfahren nach Anspruch 2, **dadurch gekennzeichnet, dass** die Messung der Umfangsänderung von ebenso vielen Sensoren wie zu beobachtenden Azimuten durchgeführt wird, wobei die Sensoren außerhalb des Reifens und im festen Raum angeordnet sind.

6. Verfahren nach einem der Ansprüche 2 bis 5, **dadurch gekennzeichnet, dass** zwischen den Messungen, den drei Komponenten einer Resultierenden von Kräften, die von der Fahrbahn auf die Aufstandsfläche eines Reifens ausgeübt werden, dem vom Reifen erzeugten Moment der Selbstausrichtung und dem maximalen Haftungskoeffizienten durch die folgenden Schritte eine Übertragungsfunktion aufgestellt wird:

   - Bilden einer Datenbank, die Fx, Fy, Fz, N und µ für eine Gesamtheit von Beanspruchungen des Reifens auf Böden mit verschiedenen Haftungskoeffizienten enthält, wobei die Parameter Fx, Fy, Fz und µ dem Reifen auferlegt und der Wert des Moments der Selbstausrichtung N gemessen werden,
   - Bestimmen durch Lernen der Gewichte eines neuronalen Netzes, das es ermöglicht, µ ausgehend von der Kenntnis von Fx, Fy, Fz und N abzuleiten.

7. Verfahren nach einem der Ansprüche 2 bis 5, **dadurch gekennzeichnet, dass** zwischen den Messungen, den drei Komponenten einer Resultierenden von Kräften, die von der Fahrbahn auf die Aufstandsfläche eines Reifens ausgeübt werden, dem vom Reifen erzeugten Moment der Selbstausrichtung und dem verwendeten Prozentsatz des Haftungspotenzials, der durch

$$p_u = \frac{\mu_{verwen\,det}}{\mu} = \frac{\sqrt{F_x^2 + F_y^2}}{\mu \cdot F_z}$$

definiert ist, durch die folgenden Schritte eine Übertragungsfunktion aufgestellt wird:

    - Bilden einer Datenbank, die Fx, Fy, Fz, N und $p_u$ für eine Gesamtheit an Beanspruchungen des Reifens auf Böden mit verschiedenen Haftungskoeffizienten enthält, wobei die Parameter Fx, Fy, Fz und $\mu$ dem Reifen auferlegt und der Wert des Moments der Selbstausrichtung N gemessen werden,
    - Bestimmen durch Lernen der Gewichte eines neuronalen Netzes, das es ermöglicht, $p_u$ direkt ausgehend von der Kenntnis von Fx, Fy, Fz und N abzuleiten.

8.  Verfahren nach einem der Ansprüche 2 bis 5, **dadurch gekennzeichnet, dass** zwischen den Messungen, den drei Komponenten einer Resultierenden von Kräften, die von der Fahrbahn auf die Aufstandsfläche eines Reifens ausgeübt werden, dem vom Reifen erzeugten Moment der Selbstausrichtung und dem maximalen Haftungskoeffizienten durch die folgenden Schritte eine Übertragungsfunktion aufgestellt wird:

    - Bilden einer Datenbank, die Fx, Fy, Fz, N und $\mu$ für eine Gesamtheit an Beanspruchungen des Reifens auf Böden mit verschiedenen Haftungskoeffizienten enthält, wobei die Parameter Fx, Fy, Fz und $\mu$ dem Reifen auferlegt und der Wert des Moments der Selbstausrichtung N gemessen werden,

    - Berechnen der reduzierten Werte $\dfrac{Fx}{Fz}, \dfrac{Fy}{Fz}, \dfrac{N}{Fz},$
    - Bestimmen durch Lernen der Gewichte eines neuronalen Netzes, das es ermöglicht, $\mu$ ausgehend von der Kenntnis von $\dfrac{Fx}{Fz}, \dfrac{Fy}{Fz}, \dfrac{N}{Fz}$ abzuleiten.

9.  Verfahren nach einem der Ansprüche 2 bis 5, bei dem unter der Annahme, dass $N = F_y.dx - F_x.dy = N_y - N_x$, wobei dx der Abstand des Angriffspunktes der Kraft Fy in der vertikalen Ebene ist, die durch das Zentrum der Aufstandsfläche verläuft und senkrecht auf der Achse X steht, und Aufstandsfläche verläuft und senkrecht auf der Achse X steht, und

dy der Abstand des Angriffspunktes der Kraft Fx in der vertikalen Ebene ist, die durch das Zentrum der Aufstandsfläche verläuft und senkrecht auf der Achse Y steht,
die Werte von $N_x$ und $N_y$ ausgehend von den Messungen der drei Momente L, M, N erhalten werden, wobei L das Moment um die Achse X, M das Moment um die Achse Y und N das Moment um Z sind.

10.  Verfahren nach Anspruch 6 oder 7, das ein neuronales Netz vom Typ Perzeptron verwendet.

11.  Verfahren nach einem der Ansprüche 2 bis 9, **dadurch gekennzeichnet, dass** die Umfangsänderung anhand der Messung des Abstands zwischen den Drähten der Karkassenlage in den Flanken geschätzt wird.

12.  Verfahren nach einem der Ansprüche 2 bis 10; **dadurch gekennzeichnet, dass** die Umfangsänderung anhand der Messung des Abstands zwischen den Drähten geschätzt wird, die einen Sensor bilden, der eine an den Abstand zwischen zwei Elektroden gebundene Änderung der Kapazität misst.

13.  Verfahren nach Anspruch 2, **dadurch gekennzeichnet, dass** mindestens drei feste Punkte im Raum verwendet werden, die so festgelegt sind, dass

    - einer der Punkte dem Azimut des Zentrums der Aufstandsfläche oder dem Azimut des der Aufstandsfläche gegenüberliegenden Punktes entspricht,
    - die beiden anderen Punkte symmetrisch in Bezug auf eine vertikale Ebene sind, die durch das Zentrum der Aufstandsfläche verläuft.

14.  Verfahren nach Anspruch 2, bei dem die Mess-Azimute symmetrisch in Bezug auf das Azimut des Zentrums der Aufstandsfläche gewählt werden ($180°+\alpha°$ und $180°-\alpha°$) mit $\alpha$ ungleich $\alpha_0$, wobei $\alpha_0$ das Azimut am Eingang der Aufstandsfläche ist, wobei $V_1^1$ und $V_2^1$ die in diesen Azimuten an der ersten Flanke gemessenen Werte und $V_1^2$ und $V_2^2$ die in diesen Azimuten an der zweiten Flanke gemessenen Werte sind,

    - $f_z(a_1V_1^1 + a_2V_2^1 + b_1V_1^2 + b_2V_2^2)$, wobei $a_1$, $a_2$, $b_1$ und $b_2$ reelle positive Koeffizienten und $f_z$ eine stetige Funktion sind, eine Schätzung der Komponente Fz ist,
    - $f_x(c_1V_1^1 - c_2V_2^1 + d_1V_1^2 - d_2V_2^2)$, wobei $c_1$, $c_2$, $d_1$ und $d_2$ reelle positive Koeffizienten und $f_x$ eine stetige Funktion sind, eine Schätzung der Komponente Fx ist,
    - $f_y(e_1V_1^1 + e_2V_2^1 - f_1V_1^2 - f_2V_2^2)$, wobei $e_1$, $e_2$, $f_1$ und $f_2$ reelle positive Koeffizienten und $f_y$ eine stetige Funktion sind, eine Schätzung der Komponente Fy ist,

- $fn(g_1V_1^1 - g_2V_2^1 - h_1V_1^2 + h_2V_2^2)$, wobei $g_1$, $g_2$, $h_1$ und $h_2$ reelle positive Koeffizienten und $f_n$ eine stetige Funktion sind, eine Schätzung des Moments der Selbstausrichtung N ist.

15. Verfahren nach Anspruch 2, bei dem die Mess-Azimute symmetrisch in Bezug auf das Azimut des Zentrums der Aufstandsfläche gewählt werden (180°+α° und 180°-α°) mit α ungleich $\alpha_0$, wobei $\alpha_0$ das Azimut am Eingang der Aufstandsfläche ist, wobei $V_1$ und $V_2$ die in den anderen Azimuten gemessenen Werte sind,

- $f_x(V_2-rV_1)$, wobei r ein reeller positiver Koeffizient und $f_x$ eine stetige Funktion ist, eine Schätzung von Fx ist,
- $f_z(V_c-(s_1V_1+s_2V_2))$, wobei $s_1$, $s_2$ reelle positive Koeffizienten und $f_z$ eine stetige Funktion sind, eine Schätzung von Fz ist,
- $f_y(V_c+u_1V_1+u_2V_2)$, wobei $u_1$ und $u_2$ reelle positive Koeffizienten und $f_y$ eine stetige Funktion sind, eine Schätzung von Fy ist.

16. Verfahren nach einem der vorhergehenden Ansprüche, bei dem ein Vertrauensindex wie folgt bestimmt wird:

- in einer Lernphase werden ein Modell $\mu = g$ (Fx, Fy, Fz, N, ...) und ein Modell $N_{adh} = f(Fx, Fy, Fz, ...)$ bestimmt, das den Wert von N darstellt, wenn der Reifen vollkommen haftet,
- in einer Verwendungsphase werden Fx, Fy, Fz und N mithilfe der Messung der Umfangsausdehnung geschätzt und $N_{adh}$ bestimmt,
- wenn $|N| - [N_{adh}|$ < Schwelle, wird der Kontakt des Reifens auf dem Boden als haftend und die Bestimmung von $\mu$ als nicht zuverlässig betrachtet,
- wenn $|N| - [N_{adh}|$ > Schwelle, ist der Gleitbereich im Kontakt ausreichend und die Schätzung von $\mu$ zuverlässig.

Figure 1

Figure 2

Z

Y

Z

X

**Figure 3**

Y

X

Contrainte latérale

$G_1$

Position dans l'aire de contact

**Figure 4**

Contrainte latérale

$\mu_1 \sigma_z$

$\mu_2 \sigma_z$

$G_2$     $G_1$

Position dans l'aire de contact

**Figure 5**

**Figure 6**

**N (m.daN)**

**FY (daN)**

Figure 7

**N (m.daN)**

**FY (daN)**

Figure 8

Figure 9

Distance entre les points $A_1$ et $A_2$

Distance
(mm)

Azimut (Deg)

$180-\alpha_0$    $180+\alpha_0$

**Figure 10a**

Distance entre les points $B_1$ et $B_2$

Distance
(mm)

Azimut (Deg)

$180-\alpha_0$    $180+\alpha_0$

**Figure 10b**

Distance entre les points $A_1$ et $A_2$

Distance (mm)

Azimut (Deg)

**Figure 11a**

Distance entre les points $B_1$ et $B_2$

Distance (mm)

Azimut (Deg)

**Figure 11b**

Distance entre les points $A_1$ et $A_2$

**Figure 12a**

Distance entre les points $B_1$ et $B_2$

**Figure 12b**

Figure 13

Distance entre les points $A_1$ et $A_2$

Figure 14a

Distance entre les points $B_1$ et $B_2$

Figure 14b

Figu

Entrées     Couche
cachée

Couche
de sortie

**Figure 15**

**Figure 16**

Mesures
aux azimuts

Mesure
externe de
la pression

Fonction de
transfert

Fx

Fy

Fz

N

Figure 17a

Mesures
aux azimuts

Fonction de
transfert
Pression

Pression
estimée
filtrée

Fonction de
transfert

Fx

Fy

Fz

N

P

Figure 17b

## Signal mesuré

Extension
circonférentielle

Temps

## Signal filtré

Extension
circonférentielle

Temps

**Figure 18**

Principe du seuillage

Extension
circonférentielle

Temps

**Figure 19**

0 deg

240 deg

C1

120 deg

180 deg

**Figure 20**

0 deg

C3

C1

240 deg    C2    120 deg

**Figure 21**

0 deg

300 deg    C3    60 deg

C1

240 deg    C2    120 deg

180 deg

**Figure 22**

| Mesures réalisées sur le pneu (déformations, contraintes ...) | → | Efforts globaux $F_x$, $F_y$, $F_z$ N | → | Coefficient d'adhérence $\mu$ |

**Figure 23**

Figure 24